(19) Europäisches Patentamt
European Patent Office
Office européen des brevets

(11) **EP 1 780 907 B1**

(12) **EUROPEAN PATENT SPECIFICATION**

(45) Date of publication and mention
of the grant of the patent:
**09.07.2008 Bulletin 2008/28**

(51) Int Cl.:
*H04B 7/06* (2006.01)    *H04B 7/08* (2006.01)

(21) Application number: **05023792.4**

(22) Date of filing: **31.10.2005**

(54) **Method for controlling the transmission of signals**

Verfahren zur Steuerung der Übertragung von Nachrichtensignalen

Procédé de contrôle de la transmission de signaux

(84) Designated Contracting States:
**AT BE BG CH CY CZ DE DK EE ES FI FR GB GR HU IE IS IT LI LT LU LV MC NL PL PT RO SE SI SK TR**

(43) Date of publication of application:
**02.05.2007 Bulletin 2007/18**

(73) Proprietors:
• **Mitsubishi Electric Information Technology Centre Europe B.V.**
**1119 NS  Schiphol Rijk (NL)**
Designated Contracting States:
**FR**
• **MITSUBISHI DENKI KABUSHIKI KAISHA Chiyoda-ku Tokyo 100-8310 (JP)**
Designated Contracting States:
**AT BE BG CH CY CZ DE DK EE ES FI GB GR HU IE IS IT LI LT LU LV MC NL PL PT RO SE SI SK TR**

(72) Inventor: **Hara, Yoshitaka**
**CS 10806**
**35708 Rennes Cedex 7 (FR)**

(74) Representative: **Maillet, Alain**
**Cabinet Le Guen Maillet**
**5, Place Newquay**
**B.P. 70250**
**35802 Dinard Cedex (FR)**

(56) References cited:
**WO-A-20/05046081**        **US-A1- 2003 112 880**

**Description**

The present invention relates generally to communication systems and in particular, to a method and apparatus for controlling the transfer of signals representatives of a group of data in a wireless telecommunication network.

Telecommunication systems in which, a plurality of antennas are used at a receiver end and/or at a transmitter end of a wireless link, are called Multiple Input Multiple Output systems (further referred to as MIMO systems). MIMO systems have been shown to offer large transmission capacities compared to those offered by single antenna systems. In particular, MIMO capacity increases linearly with the number of transmitting or receiving antennas, whichever the smallest, for a given Signal-to-Noise Ratio and under favourable uncorrelated channel conditions.

Beamforming has been investigated for MIMO systems in order to optimize the range and performance of the wireless link between the receiver end and the transmitter end. Multiple-input multiple-output (MIMO) scheme with beamforming uses antenna signal processing at both ends of the wireless link to maximize the signal-to-noise power ratio (SNR) and/or signal-to-noise-plus-interference power ratio (SNIR), thereby improving the link margin between two telecommunication devices.

Spatial multiplexing methods have been proposed in MIMO systems. In a spatial multiplexing system, at least two independent data streams are transmitted using at least two transmitting antennas respectively. In a receiving end, at least two antennas are used and each antenna receives at least two signals simultaneously. Therefore, the received signals must be recovered separately with a detection algorithm for each signal. The separated signals are decoded independently.

In case of a telecommunication system wherein plural terminals are linked to a base station, it is difficult sometime for the terminals to determine the best weighting vector which weights the signals received or transferred through its antennas as far as it is not aware about the other terminals which are linked to the base station and which may disturb its communication with the base station.

Furthermore, when a single terminal is linked to a base station, or in a point to point communication, the terminal is not aware if there are some other base stations and terminals linked to them in the vicinity of the terminal. Such unawareness of the communication condition on the wireless link limits the ability of a terminal to determine the best weighting vector it has to apply to signals transferred or received through its antennas.

The patent application US 2003/0112880 discloses a method in which the available transmission channels are segregated into one or more groups, and the channels in each group are selected for use for data transmission. Data for each group is coded and modulated based on a particular coding and modulation scheme to provide modulation symbols, and the modulation symbols for each selected channel are weighted based on an assigned weight.

The aim of the invention is therefore to propose a method, and a device which allow telecommunication devices to use the best weighting vectors in order to perform efficient beamforming and to propose a method, and a device which allow in a simple and efficient way the allocation of the radio resources of the wireless network.

To that end, the present invention concerns a method for controlling the transfer of signals representatives of a group of data in a wireless telecommunication network comprising a first telecommunication device linked through plural second telecommunication devices through the wireless network, the first telecommunication device comprising at least two antennas, at least one of the second telecommunication devices comprising at least two antennas, characterised in that the method comprises the steps executed by the first telecommunication device of:

- calculating at least two information, each information being representative of the achievable link conditions between the first telecommunication device and one second telecommunication device,
- determining which second telecommunication device, among the at least two second telecommunication devices, is involved in the transfer of the group of data through the link according to the determined information,
- determining at least a weighting vector to be used for the transfer of the group of data, the elements of the weighting vector weighting the signals representatives of the group of data transferred through at least two antennas.

The present invention concerns also a device for controlling the transfer of signals representatives of a group of data in a wireless telecommunication network comprising a first telecommunication device linked through plural second telecommunication devices through the wireless network, the first telecommunication device comprising at least two antennas, at least one of the second telecommunication devices comprising at least two antennas, characterised in that the device is include in the first telecommunication device and comprises:

- means for calculating at least two information, each information being representative of the achievable link conditions between the first telecommunication device and one second telecommunication device,
- means for determining which second telecommunication device, among the at least two second telecommunication devices, is involved in the transfer of the group of data through the link according to the determined information,
- means for determining at least a weighting vector to be used for the transfer of the group of data, the elements of the weighting vector weighting the signals representatives of the group of data transferred through at least two antennas.

Thus, if the first telecommunication device is aware of any other telecommunication devices which may disturb the transfer of information between the first and the second telecommunication devices, the determination of the weighting vector can be made considering these disturbances.

Furthermore, the first telecommunication device can then control the weighting made by at least one second telecommunication device on the signals transferred between the first telecommunication device and the second telecommunication device.

Such case is particularly effective when the first telecommunication device is a base station and the second telecommunication device is a terminal.

Furthermore, by determining which second telecommunication device, among the at least two second telecommunication devices, is involved in the transfer of the group of data through the link according to information representative of the achievable link conditions between the first telecommunication device and the second telecommunication devices, it is possible to allocate the radio resources of the wireless network in an efficient way.

According to a first advantageous embodiment, the determination of the second device involved in the transfer of the group of data through the link is made also according to the number of antennas of each second telecommunication device.

Thus some priority can be given to second telecommunication devices according to their respective number of antennas.

According to a second advantageous embodiment, each information representative of the achievable link conditions between the first telecommunication device and one second telecommunication device is a matrix representative of the achievable link conditions between the first telecommunication device and the second telecommunication device.

According to a third advantageous embodiment, the modulation and coding scheme to be used by the second telecommunication device involved in the transfer of the group of data are determined.

Thus, the use of the resources of the wireless network is optimized.

Furthermore, as the first telecommunication device determines the modulation and coding scheme to be used by the second telecommunication device involved in the transfer of the group of data, the second telecommunication device doesn't need to comprise complex processing capabilities.

According to a fourth advantageous embodiment, the determination of the modulation and coding scheme to be used by the second telecommunication device involved in the transfer of the group of data is made using the determined weighting vector.

Thus, the determination of the modulation and coding scheme is more accurate and takes profit of the determination of the weighting vector.

According to a fifth advantageous embodiment, the determined second telecommunication device is the second telecommunication device which is expected to receive signals representatives of the group of data transferred by the first telecommunication device.

Thus, the first telecommunication device determines to which second telecommunication device, the group of information should be sent according to each calculated matrices representatives of the achievable link conditions between the first telecommunication device and the second telecommunication device.

According to a sixth advantageous embodiment, the at least one weighting vector to be used for the transfer of the group of data, is a weighting vector which weights the signals representatives of the group of data transferred by the first telecommunication device.

Thus, the first telecommunication device can perform beamforming.

According to a seventh advantageous embodiment, the first telecommunication device comprises N antennas, at most N groups of data are transferred simultaneously through the N antennas, and in that it is determined successively, for each group of data of the at most N groups of data, the second telecommunication device involved in the transfer of the group of data and the weighting vector to be used for the transfer of the group of data.

Thus the determination of the second telecommunication devices is simple and doesn't need any iterative process.

According to a eighth advantageous embodiment, the second telecommunication device involved in the transfer of a group of data is determined by:

- calculating a matrix $U_n$ using the following formula : $U_n = \left( I - \sum_{l=1}^{n-1} w_{lD} w_{lD}^H \right),$

wherein $I$ is the identity matrix, $n$ is the identifier of the group of data for which the control of the transfer of the signals representatives of the group of data is currently done, $l$=1 to $n$-1 are the identifiers of the groups of data for which the control of the transfer of the signals representatives of the group of data is already done, $w_{lD}$ is the weighting vector which weights the signals transferred by the first telecommunication device determined for the $l$-th group of data, $()^H$ is the complex conjugate transpose of (),

- calculating, for each second telecommunication device $k$, with $k$=1 to $K$, $K$ is the number of second telecommunication devices, a matrix $R_{kn}$ which is the correlation matrix of interference and noise components for the second telecommunication device $k$, $R_{kn} = \sum_{l=1}^{n-1} P_s^{(l)} H_k w_{lD} w_{lD}^H H_k^H + P_{kz} I$, where $P_s^{(l)}$ is the power of the signal transferred by the first telecommunication device through its $N$ antennas for the $l$-th group of data, $H_k$ is the channel matrix between the second telecommunication device $k$ and the first telecommunication device, $P_{kz}$ is the noise power matrix for the second telecommunication devices,

- calculating, for each second telecommunication device $k$, a matrix $\Psi_{kn} = U_n^H H_k^H R_{kn}^{-1} \overline{H_k} U_n$ which is representative of the achievable link conditions between the first telecommunication device and the second telecommunication device $k$,

- determining among the $K$ second telecommunication devices, the second telecommunication device $\hat{k}$ as one involved in the transfer of the group of data which satisfies the following formula : $\hat{k} = \arg_k \max f_k(\rho\langle\Psi_{kn}\rangle)$, where $\rho\langle.\rangle$ is the largest eigenvalue of the matrix $\langle\cdot\rangle$, $\arg_k \max$ represents the second telecommunication device $k$ which has the largest value of $f_k(\rho\langle\Psi_{kn}\rangle)$, $f_k$ () is a priority function.

Thus, the determination of each second telecommunication device is made without complex calculation and/or without any iteration process.

According to a ninth advantageous embodiment, the priority function $f_k()$ is the identity function or a function which weights the largest eigenvalue of the matrix $\Psi_{kn}$ by an averaged Signal to Noise Ratio over a long period of time or a wide frequency band or by the number of antennas of the second telecommunication device.

Thus, when the priority function $f_k()$ is the identity function, the determination of the second telecommunication device is made using only the largest eigenvalue of the calculated matrices. Using only the largest eigenvalue, the present invention enables the determination of each second telecommunication device which enables to reach a high achievable signal to noise plus interference power ratio for each of the determined second telecommunication device.

Furthermore, using the averaged Signal to Noise Ratio or the number of antennas of the second telecommunication device, it is possible to determine the second telecommunication device according to other criterion.

According to a tenth advantageous embodiment, the weighting vector which weights the signals representatives of the group of data is determined for each group of data according to the following formula : $w_{nD} = e\langle\Psi_{kn}\rangle$, where $e\langle\Psi_{kn}\rangle$ is the eigenvector corresponding to the largest eigenvalue of the matrix $\Psi_{kn}$ of the second telecommunication device involved in the transfer of the $n$-th group of data.

Thus, the achievable signal to noise plus interference power ratio of each determined second telecommunication device is maximized.

According to a eleventh advantageous embodiment, an achievable signal to noise plus interference power ratio is determined, for each determined second telecommunication device which is expected to receive signals representatives of the group of data, from the determined weighting vector which weights the signals representatives of the group of data transferred to the second telecommunication device.

According to a twelfth advantageous embodiment which may be used in combination with any of the first to fifth embodiments, the determined second telecommunication device is the second telecommunication device which is expected to transfer signals representatives of the group of data to the first telecommunication device.

Thus, the first telecommunication device determines which second telecommunication device should send the group of information according to each calculated matrices representative of the achievable link conditions between the first telecommunication and the second telecommunication device.

According to a thirteenth advantageous embodiment, the at least one weighting vector to be used for the transfer of the group of data, is a weighting vector which weights the signals representatives of the group of data transferred by the second telecommunication device.

Thus, the second telecommunication device can perform beamforming.

According to a fourteenth advantageous embodiment, the first telecommunication device comprises $N$ antennas, at most $N$ groups of data are received simultaneously through the $N$ antennas, and in that it is determined successively, for each group of data of the at most $N$ groups of data, the second telecommunication device involved in the transfer of the group of data and the weighting vector to be used for the transfer of the group of data.

Thus the determination of the second telecommunication devices is simple and doesn't need any iterative process.

According to a fifteenth advantageous embodiment, the second telecommunication device involved in the transfer of a group of data is determined by:

- calculating the correlation matrix $R_n$ of interference and noise components which is given by :

$$R_n = \sum_{l=1}^{n-1} P_s^{(l)} H_{k(l)}^T v_{lU} v_{lU}^H H_{k(l)}^* + R_{IN} \ ,$$

where $n$ is the identifier of the group of data for which the control of the transfer of the signals representatives of the group of data is currently done, $l$=1 to $n$-1 are the identifiers of the groups of data for which the control of the transfer of the signals representatives of the groups of data is already done, $v_{1U}$ is the weighting vector which weights the signals representatives of the group of data transferred by the second telecommunication device $k$ determined for the $l$-th group of data, with $k$=1 to $K$, $K$ is the number of second telecommunication devices, $()^T$ is the transpose of (), $()^H$ is the complex conjugate transpose of (), $H_k$ is the channel matrix between the second telecommunication device $k$ and the first telecommunication device, $Hk_{(l)}$ is the channel matrix between the second telecommunication device $k$ which has already been determined to send the $l$-th group of data and the first telecommunication device, $()^*$ is the complex conjugate of (), $R_{IN} = E\left[z_{IN}(p)z_{IN}^H(p)\right]$ , $z_{IN}(p) = [z_1(p),...,z_{Mk}(p)]$ is the interference plus noise components of the first telecommunication device and $p$ is the $p$-th received sample, $P_s^{(l)}$ is the power of the signal transferred by the second telecommunication device through its $N$ antennas for the $l$-th group of data,

- calculating, for each second telecommunication device $k$, a matrix $H_k^* R_n^{-1} H_k^T$ which is representative of the achievable link conditions between the first telecommunication device and the second telecommunication device $k$,
- determining among the $K$ second telecommunication devices, the second telecommunication device $\hat{k}$ as the one involved in the transfer of the group of data which satisfies the following formula :

$$\hat{k} = \arg_k \max f_k(\rho\langle H_k^* R_n^{-1} H_k^T \rangle),$$

where $\rho\langle \cdot \rangle$ is the largest eigenvalue of the matrix $\langle \cdot \rangle$, $\arg_k$ max represents the second telecommunication device $k$ which has the largest value of $f_k()$, $f_k(\rho\langle H_k^* R_n^{-1} H_k^T \rangle)$ is a priority function.

Thus, the determination of the second telecommunication devices is determined without complex calculation and/or without any iteration process.

According to a sixteenth advantageous embodiment, the weighting vector which weights the signals representatives of the group of data is determined for each group of data according to the following formula :

$$v_{nU} = e\langle H_k^* R_n^{-1} H_k^T \rangle,$$

where $e\langle H_k^* R_n^{-1} H_k^T \rangle$ is the eigenvector corresponding to largest eigenvalue of the matrix $H_k^* R_n^{-1} H_k^T$ of the second telecommunication device involved in the transfer of the $n$-th group of data..

Thus, the achievable signal to noise plus interference power ratio of each determined second telecommunication device is maximized.

According to a seventeenth advantageous embodiment, an achievable signal to noise plus interference power ratio is further determined, for each determined second telecommunication device, from the determined weighting vector which weights the signals representatives of the group of data transferred to the second telecommunication device.

According to a eighteenth advantageous embodiment, which is used in combination with the fifth embodiment, two weighting vectors are determined, a weighting vector $w_{nD}$ which weights the signals representatives of the group of data transferred by the first telecommunication device and a weighting vector $v_{nD}$ which weights the signals representatives of the group of data received by the second telecommunication device.

Thus, the first and second telecommunication devices can perform beamforming.

According to a nineteenth advantageous embodiment, the second telecommunication device involved in the transfer of a group of data is determined by:

- calculating a matrix $\bar{B}_n = \llcorner H_{k(1)}v_{1D},...,H_{k(n-1)}v_{(n-1)D,}\lrcorner$, $n$ is the identifier of the group of data for which the control of the transfer of the signals representatives of the group of data is currently done, $l$=1 to $n$-1 are the identifiers of the groups of data for which the control of the transfer of the signals representatives of the group of data is already done where $H_{k(l)}$ is the channel matrix of the second telecommunication $k$ which is expected to receive signals representatives of the $l$-th group of data transferred by the first telecommunication device, $v_{lD}$ is the weighting vector which weights the signals representatives of the group of data determined for the $l$-th group of data,

- calculating a matrix $\mathbf{\Phi}_n = I - \bar{B}_n(\bar{B}_n^H\bar{B}_n)^{-1}\bar{B}^H$ , where $I$ is the identity matrix,

- calculating, for each second telecommunication device $k$, $k$=1 to $K$, $K$ is the number of second telecommunication devices, a matrix $H_k^*\mathbf{\Phi}_n^{-1}H_k^T$ which is representative of the achievable link conditions between the first telecommunication device and the second telecommunication device $k$,

- determining among the $K$ second telecommunication devices, the second telecommunication device $\hat{k}$ as the one involved in the transfer of the group of data which satisfies the following formula :

$$\hat{k} = \arg_k \max \frac{P_s}{P_{kz}} f_k \rho\langle H_k^*\mathbf{\Phi}_n H_k^T\rangle,$$

where $\rho\langle\cdot\rangle$ is the largest eigenvalue of the matrix $\langle\cdot\rangle$, $\arg_k$ max represents the second telecommunication device $k$

which has the largest value of $\dfrac{P_s}{P_{kz}}\rho\langle H_k^*\mathbf{\Phi}_n H_k^T\rangle,$, $f_k$ is a priority coefficient, $P_s$ is the power of the signals transferred by the first telecommunication device and $P_{kz}$ is the noise power matrix for the second telecommunication devices.

Thus, the determination of the second telecommunication devices is determined without complex calculation and/or without any iteration process.

According to a twentieth advantageous embodiment, the weighting vector $v_{nD}$ which weights the signals representatives of the group of data transferred by the second telecommunication device is calculating using the following formula:

$v_{nD} = e\langle H_k^*\mathbf{\Phi}_n H_k^T\rangle$ , where $e\langle H_k^*\mathbf{\Phi}_n H_k^T\rangle$ is the eigenvector corresponding to the largest eigenvalue of the

matrix $H_k^*\mathbf{\Phi}_n H_k^T$ of the second telecommunication device involved in the transfer of the $n$-th group of data.

According to a twenty-first advantageous embodiment, each weighting vector $w_{nD}$ which weights the signals transferred by the first telecommunication device to the determined second telecommunication device for the $n$-th group of data is calculating using the following formula:

$$\sqrt{P_s}[w_{1D},...,w_{n\max D}] = P'\{(BB^H)^{-1}B\}^*,$$

where $P' = diag\lfloor\sqrt{P_s'^{(1)}},\sqrt{P_s'^{(2)}},...,\sqrt{P_s'^{(n\max)}}\rfloor,$

$B = [b_1,...,b_{n\max}]$,

$b_l = H_{k(l)}^T v_{lD}$ for $l$=1 to $nmax$ with $\|v_{lD}\| = 1$ and $nmax$ is the number of group of data transferred simultaneously.

According to still another aspect, the present invention concerns a computer program which can be directly loadable into a programmable device, comprising instructions or portions of code for implementing the steps of the method according to the invention, when said computer programs are executed on a programmable device.

Since the features and advantages relating to the computer program are the same as those set out above related to the method and device according to the invention, they will not be repeated here.

The characteristics of the invention will emerge more clearly from a reading of the following description of an example embodiment, the said description being produced with reference to the accompanying drawings, among which :

Fig. 1 is a diagram representing the architecture of the system according to the present invention ;

Fig. 2 is a diagram representing the architecture of a base station according to the present invention ;

Fig. 3 is a diagram representing the architecture of the spatial multiplexer of the base station according to the present invention ;

Fig. 4 is an algorithm executed by the base station which describes the general principle of the present invention ;

Fig. 5 is an algorithm executed by the base station in order to determine a spatial multiplexing on the downlink channel according to a first mode of realisation of the present invention ;

Fig. 6 is an algorithm executed by the base station in order to determine the spatial multiplexing on the uplink channel according to a first mode of realisation of the present invention ;

Fig. 7 is an algorithm executed by the base station in order to determine the spatial multiplexing on the downlink channel according to a second mode of realisation of the present invention.

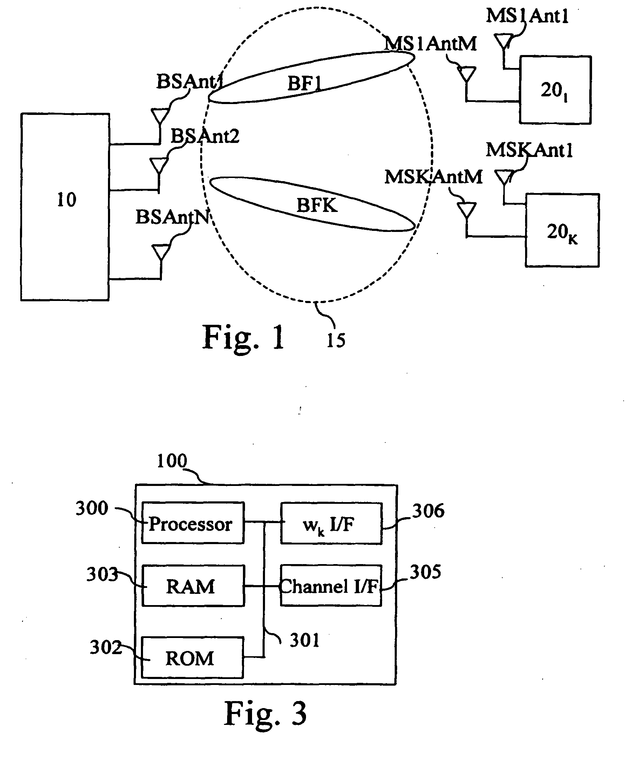

**Fig. 1** is a diagram representing the architecture of the system according to the present invention.

In the system of the Fig. 1, a plurality of second telecommunication devices $20_1$ to $20_K$ are linked through a wireless network 15 to a first telecommunication device 10 using an uplink and a downlink channel.

Preferably, and in a non limitative way, the first telecommunication device 10 is a base station 10 or a node of the wireless network 15. The second telecommunication devices 20, to $20_K$ are terminals like mobile phones or personal computers.

The base station 10 has $N$ antennas noted BSAnt1 to BSAntN. The terminals $20_1$ to $20_K$ have $M_k$ antennas noted respectively MSAnt1 to MSAntM and MSKAnt1 to MSKAntM. It has to be noted here that the number of $M_k$ antennas may vary according to each terminal $20_k$ with $k$=1 to $K$. At least one of the terminals $20_1$ to $20_K$ has at least two antennas.

The base station 10 transfers signals representatives of a group of data to the terminals $20_1$ to $20_K$ through the downlink channel and the terminals $20_1$ to $20_K$ transfer signals to the base station 10 through the uplink channel.

When the system uses Time Division Duplexing scheme, the signals transferred in uplink and downlink channels are duplexed in different time periods of the same frequency band. The signals transferred within the wireless network 15 share the same frequency spectrum. The share spectrum is time divided using repeating frames having a fixed number of time slots. Each time slot is used to transmit either on uplink or downlink signals.

When the system uses Frequency Division Duplexing scheme, the signals transferred in uplink and downlink channels are duplexed in different frequency bands. The spectrum is divided into different frequency bands and the uplink and downlink signals are transmitted simultaneously.

The base station 10 transfers through the antennas BSAnt1 to BsAntN the signals to be transmitted to the terminals $20_1$ to $20_K$. More precisely, when the base station 10 transmits signals representatives of a group of data to a given terminal $20_k$ through the downlink channel, the signals are $N$ times duplicated and each duplicated signal is weighted, i.e. multiplied, by an element of a downlink weighting vector $w_{nD}$ of the base station 10.

The base station 10 receives through the antennas BSAnt1 to BsAntN the signals transmitted by the terminals $20_1$ to $20_K$. More precisely, when the base station 10 receives signals representatives of a group of data from a given terminal $20_k$ with $k$=1 to $K$ through the uplink channel, each signal received by each of its antennas BSAnt1 to BsAntN is weighted, i.e. multiplied, by an element of an uplink weighting vector $w_{nU}$ of the base station 10.

According to the invention, the weighting vectors $w_{nD}$, and/or $w_{nU}$, are determined by the base station 10 for each of the $n$ groups of data received simultaneously, where $n$ = 1 to at most $N$, to be transferred or received by the base station 10. As a result, the base station 10 and each terminal $20_k$ performs beamforming, i.e. controls the spatial direction of the transmitted or received signals.

The ellipse noted BF1 in the Fig. 1 shows the pattern of the radiated signals by the antennas BSAnt1 to BSAntN transferred to the terminal $20_1$ by the base station 10.

The ellipse noted BFK in the Fig. 1 shows the pattern of the radiated signals by the antennas BSAnt1 to BSAntN transferred to the terminal $20_K$ by the base station 10.

The base station 10 further determines the weighting vectors $v_{nD}$ and/or $v_{nU}$, with $n$=1 to $nmax$, that each terminal $20_k$ , where $k$ =1 to $K$, has to use for weighting the signals representatives of group of data, received and/or transmitted through the antennas MSkAnt1 to MSkAntM. The base station 10 transfers to a given terminal $20_k$ the weighting vectors $v_{nD}$ and/or $v_{nU}$ by transferring the elements of weighting vector $v_{nD}$ and/or $v_{nU}$ within a group of data.

It has to be noted here that, in a variant of realization, the base station 10 doesn't transfer the weighting vectors $v_{nD}$ to the terminals 20. Each terminal $20_k$ determines by itself the downlink weighting vector it uses.

In another variant of realisation, the base station 10 transfers to the terminal $20_k$ which is determined to transfer a group of information $n$ the determined information related to the weighting vector $v_{nU}$, and transfers to the terminal $20_k$ through the wireless network 15 at least a signal being weighted by the information related to the determined weighting vector $v_{nU}$.

More precisely, each weighting vector $v_{nD}$ is determined for each group of data $n$ to be transferred simultaneously in the downlink channel or each weighting vector $v_{nU}$ is determined for each group of data $n$ to be transferred simultaneously in the uplink channel.

Then, each terminal $20_k$ transfers, through its antennas MSkAnt1 to MSkAntM, the signals representatives of a group of data to be transmitted to the base station 10. More precisely, when a terminal $20_k$ transmits signals representatives of a group of data to the base station 10 through the uplink channel, the signals are $M_k$ times duplicated and each duplicated signal is weighted, i.e. multiplied, by an element of an uplink weighting vector $v_{nU}$ determined for the terminal $20_k$ which is determined to receive the $n$-th group of data.

The ellipse BF1 shows the pattern of the radiated signals by the antennas MS1Ant1 to MS1AntM transferred by the terminal $20_1$ to the base station 10.

The ellipse BFK shows the pattern of the radiated signals by the antennas MSKAnt1 to MSKAntM transferred by the terminal $20_K$ to the base station 10.

Each terminal $20_k$ receives, through its antennas MSkAnt1 to MSkAntM, signals transmitted by the base station 10. More precisely, when a terminal $20_k$ receives signals from the base station 10 through the downlink channel, each signal received by each of its antennas MSkAnt1 to MSkAntM is weighted, i.e. multiplied, by an element of the determined downlink weighting vector $v_{nD}$ for the terminal $20_k$ which is determined to receive the $n$-th group of data.

As a result, the terminal $20_k$ performs beamforming, i.e. controls the spatial direction of the received signals from the base station 10.

According to the variant of realization, each terminal $20_k$ determines by itself the downlink weighting vector it has to use.

According to the other variant of realization, each terminal $20_k$ receives from the base station 10 plural signals through the downlink channel and calculates from the received signals the weighting vector $v_{nD}$ it has to use when it receives signals from the base station 10 through the downlink channel. Each terminal $20_k$ receives from the base station 10 plural signals through the downlink channel and calculates from the received signal or signals the weighting vector $v_{nU}$ it has to use when it transfers signals to the base station 10 through the uplink channel.

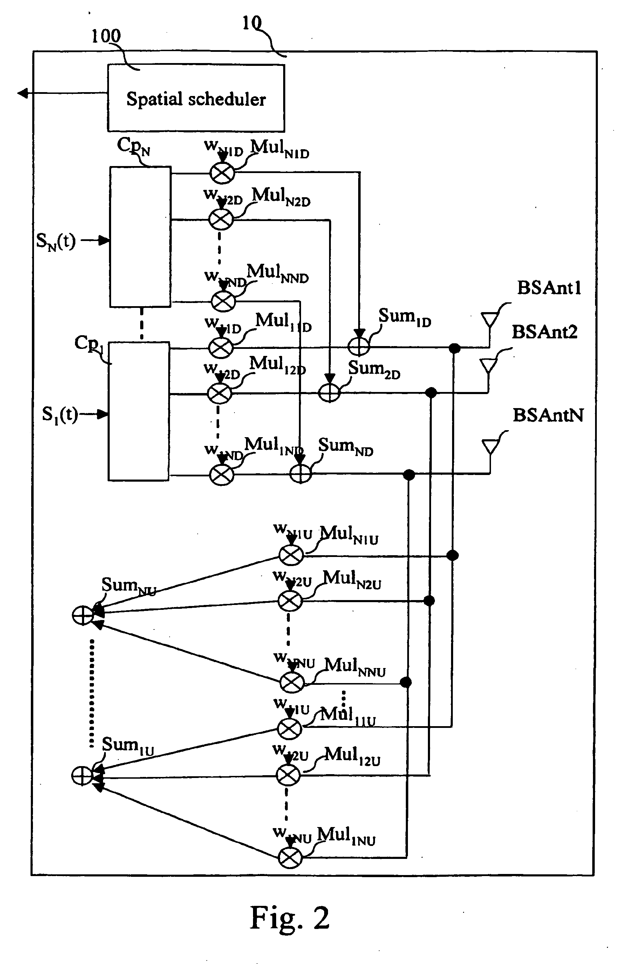

**Fig. 2** is a diagram representing the architecture of a base station according to the present invention.

The base station 10 comprises a spatial multiplexer 100, N duplication modules noted $Cp_1$ to $CP_N$, $N*N$ downlink multiplication modules noted $Mul_{11D}$ to $Mul_{NND}$, N downlink summation modules noted $Sum_{1D}$ to $Sum_{ND}$, $N*N$ uplink multiplication modules noted $Mul_{11U}$ to $Mul_{NNU}$, N uplink summation modules noted $Sum_{1U}$ to $Sum_{NU}$.

According to the invention, the base station 10 transfers simultaneously, through the downlink channel, at most N groups of data. The spatial multiplexer 100 determines information which are representative of the achievable link conditions between the base station 10 and each terminal $20_k$. The spatial multiplexer 100 determines, for each of the at most N groups of data, the terminal $20_k$ which has to receive the group of data according to the determined information which are representative of the achievable link conditions. The base station 10 receives simultaneously, through the uplink channel, $nmax$ groups of data with $nmax \leq N$. The spatial multiplexer 100 determines, for each of the $nmax$ groups of data to be received, the terminal $20_k$ which has to transfer the group of data to the base station 10 according to the determined information representative of the achievable link conditions.

The signals $S_1(t)$ to $S_N(t)$ are the signals, which are respectively representative of N groups of data, to be transferred to the K terminals $20_1$ to $20_K$ linked to the base station 10. Each of the signals $S_1(t)$ to $S_N(t)$ are N times duplicated by a respective duplication module $Cp_1$ to $CP_N$. For each signal to be transferred to a terminal $20_k$ with $k=1$ to $K$, each duplicated signal is weighted by the elements of a downlink weighting vector $w_{nD}$ corresponding to the group of data noted $n$ to be transferred to the terminal $20_k$ and determined by the spatial multiplexer 100. The combination of each signals transferred to a terminal $20_k$ by the antennas BSAnt1 to BSAntN is called beamforming signal.

The signals weighted by the first element of each downlink weighting vector $w_{nD}$ of the base station 10 are then summed and transferred through the first antenna BSAnt1 of the base station 10. The signals weighted by the second element of each weighting vector $w_{nD}$ of the base station 10 are then summed and transferred through the second antenna BSAnt2 of the base station 10 and so on until the $N$-th elements of the weighting vector $w_{nD}$ of the base station 10.

It has to be noted here that the signals are prior to be transferred to each antenna BSAnt1 to BSAntN, frequency up converted, mapped and so on, as it is done in classical wireless telecommunication devices.

The base station 10 receives simultaneously $nmax$, with **$nmax \leq N$** signals which are representative of $nmax$ groups of data transferred by at least a part of the K terminals $20_1$ to $20_K$. The signals received by each antenna BSAnt1 to BSAntN are respectively weighted, i.e. multiplied by the elements of an uplink weighting vector $w_{nU}$ of the base station 10.

Each signal received through the antenna BSAnt 1 is N times multiplied by the first elements ($w_{11U},...w_{nmax1U}$) of the uplink weightings vectors $w_{1U}$ to $w_{namxU}$ of the base station 10.

Each signal received through the antenna BSAnt2 is $N$ times multiplied by the second elements ($w_{12U},....w_{nmax2U}$) of the uplink weightings vector $w_{1U}$ to $w_{nmaxU}$ of the base station 10.

Each signal received through the antenna BSAntN is N times multiplied by the $N$-th elements ($w_{1NU},... w_{nmaxNU}$) of the uplink weightings vector $w_{1U}$ to $w_{nmaxU}$ of the base station 10.

The signals weighted by the uplink weighting vector $w_{1U}$ of the base station 10 are then added by a by an adder noted $Sum_{1U}$ in order to form the first received group of data.

The signals weighted by the uplink weighting vector $w_{NU}$ of the base station 10 are then added by a by an adder noted $Sum_{NU}$ in order to form the $N$-th received group of data.

It has to be noted here that the signals received from each antenna BSAnt1 to BSAntN are frequency down converted, demapped and so on, as it is done in classical wireless telecommunication devices.

**Fig. 3** is a diagram representing the architecture of the spatial multiplexer of the base station according to the present invention.

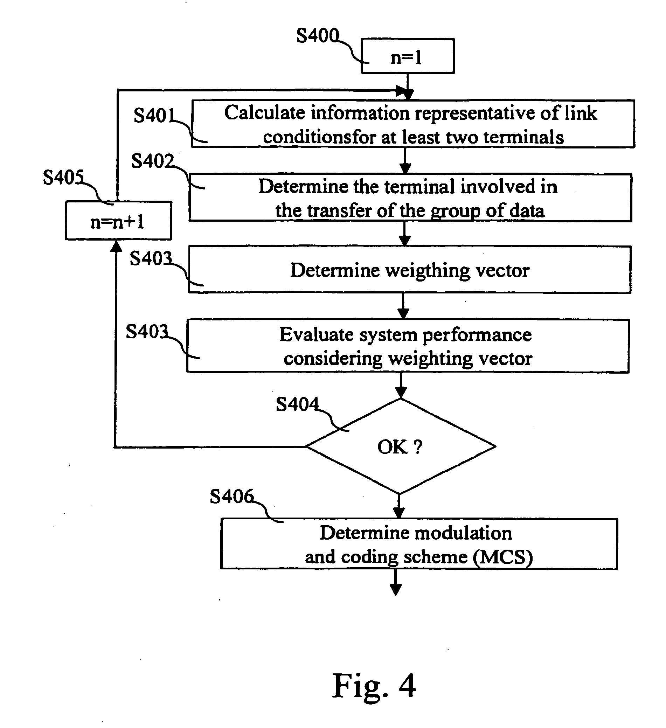

The spatial multiplexer 100 of the base station 10 has, for example, an architecture based on components connected together by a bus 301 and a processor 300 controlled by programs as disclosed in the Figs. 4, 5, 6 or 7.

The bus 301 links the processor 300 to a read only memory ROM 302, a random access memory RAM 303, a vector interface 306 and a channel interface 305.

The memory 303 contains registers intended to receive variables, and the instructions of the programs related to the algorithm as disclosed in the Figs. 4, 5, 6 or 7.

The processor 300 determines the downlink weighting vectors $w_{ID}$ to $w_{ND}$ of the base station 10, the uplink weighting vectors $w_{1U}$ to $w_{NU}$ of the base station 10, the downlink weighting vectors $v_{1D}$ to $v_{ND}$ of the terminals $20_1$ to $20_K$ which have been determined to receive each group $n$ of data with $n = 1$ to $N$ and the uplink weighting vectors $v_{1U}$ to $v_{NU}$ of the terminals $20_I$ to $20_K$ which have been determined to transmit each group $n$ of data 10 with $n = 1$ to $nmax$ where $nmax$ is $\leq N$.

The read only memory 302 contains instructions of the programs related to the algorithm as disclosed in the Figs. 4, 5, 6 or 7 which are transferred, when the base station 10 is powered on to the random access memory 303.

The vector interface 306 enables the transfer of the downlink weighting vectors $w_{1D}$ to $w_{ND}$ of the base station 10 to the respective multipliers $Mul_{11D}$ to $Mul_{NND}$.

The vector interface 306 enables the transfer of the uplink weighting vectors $w_{1U}$ to $w_{NU}$ of the base station 10 to the respective multipliers $Mul_{11U}$ to $Mul_{NNU}$.

The vector interface 306 enables also the transfer of the downlink and uplink weighting vectors $v_{1D}$ to $v_{ND}$, $v_{1U}$ to $v_{NU}$ to be used by the terminals $20_k$ in order to receive or transfer at least a group of data according to the invention.

Such downlink and uplink weighting vectors $v_{1D}$ to $v_{ND}$, $v_{1U}$ to $v_{NU}$ are transferred to the respective terminals 20 within at least a group of data or, by determining downlink weighting vectors of the base station 10 which are related to the weighting vector $v_{1D}$ to $v_{ND}$ or $v_{1U}$ to $v_{NU.}$

According to a variant of realisation, the weighting vector $v_{1D}$ to $v_{ND}$ are not transferred by the base station 10.

The base station 10 transfers then at least $nmax$ pilot signals which are weighted by the downlink weighting vectors $w_{1D}$ to $w_{ND}$ of the base station 10 which are related to the weighting vectors $v_{1D}$ to $v_{ND}$ or $v_{1U}$ to $v_{NU}$. Each determined terminal 20 receives at least a pilot signal from the base station 10, determines from the at least one received pilot signal, the downlink weighing vector $v_{nU}$ or $v_{nU}$ it has to use for weighting the signals representatives of the $n$-th group of data.

The channel interface 305 is adapted for receiving pilot signals from the terminals $20_1$ to $20_K$ and to perform an estimation of link conditions or in other words to perform, for each terminal $20_k$, an estimation of the channel response matrix between the terminal $20_k$ and the base station 10.

**Fig. 4** is an algorithm executed by the base station which describes the general principle of the present invention.

The present algorithm is executed each time the base station 10 has to transfer simultaneously at most $N$ groups of data to at least one of the terminals $20_1$ to $20_K$.

At step S400, the base station 10 sets a variable noted $n$ to 1. The variable $n$ denotes the group of data under process.

At next step S401, the base station 10 calculates at least two information, each information being representative of the achievable link conditions between the base station and one terminal $20_k$ with $k=1$ to $K$.

At next step S402, the base station 10 determines, which terminal $20_k$ among the at least two terminals 20, is involved in the transfer of the group of data through the link according to the determined information.

At next step S403, the base station 10 determines at least a weighting vector to be used for the transfer of the group of data, the elements of the weighting vector weighting the signals representatives of the group of data transferred through at least two antennas.

At next step S403, the base station 10 determines the system evaluation function for the group of data under process considering the at least one determined weighting vector at step S403.

At next step S404, the base station 10 determines the system evaluation function for the group is acceptable or not.

If the system evaluation function for the group of data is acceptable, the base station 10 moves to step S405, increments the variable $n$ of one unit and returns to step S401 in order to consider the next group of data.

If the system evaluation function for the group of data is not acceptable, $nmax$ group of data will be transferred simultaneously with $nmax=n-1$. The base station 10 moves to step S406 and selects, for each determined terminal 20, a modulation and coding scheme to be used for the transfer of the group of data of which they are involved in the transfer.

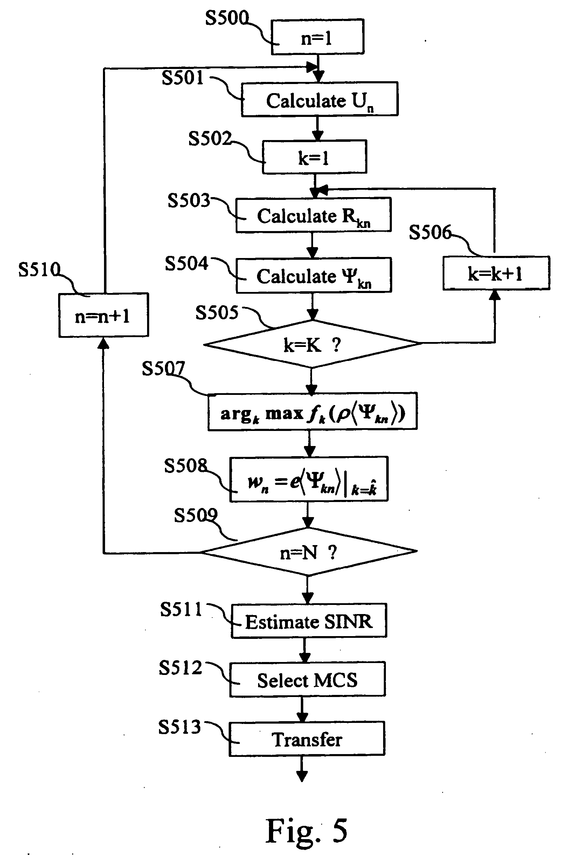

**Fig. 5** is an algorithm executed by the base station in order to determine a spatial multiplexing on the downlink channel according to a first mode of realisation of the present invention.

The present algorithm is executed each time the base station 10 has to transfer simultaneously $N$ groups of data to at least one of the terminals $20_1$ to $20_K$.

The base station 10 transfers simultaneously, through its N antennas, N groups of data. The base station 10 calculates information representative of the achievable link conditions between the base station 10 and each of the $K$ terminals $20_1$ to $20_K$ and determines which terminal 20 or terminals 20 has or have to receive at least a group of data according to the determined information.

According to the first mode of realisation of the invention, the base station 10, determines for each transferred group of data $n$, where $n$ = 1 to $N$ is the indicia of a group of data, a downlink weighting vector $w_{nD}$ of the base station 10.

More precisely the present algorithm is executed by the processor 300 of the spatial multiplexer 100 of the base station 10.

At step S500, the processor 300 sets a variable noted $n$ to 1. The variable $n$ denotes the group of data under process.

At next step S501, the processor 300 calculates the matrix $U_n$ using the following formula :

$$U_n = \left( I - \sum_{l=1}^{n-1} w_{lD} w_{lD}^H \right),$$

wherein $I$ is the identity matrix, $w_{lD}$, for $l$=1 to $n$-1, are the downlink weighting vectors of the base station 10 determined for the first to $n$-1 groups of data previously processed, $w_{lD}^H$ is the complex conjugate transpose of downlink weighting vector of the base station 10 $w_{lD}$.

It has to be noted here that the downlink weighting vector $w_{ND}$ of the base station 10 are mutually orthogonal.

At next step S502, the processor 300 sets the variable $k$ to one. The variable $k$ denotes an indicia of the terminal $20_k$ under process.

At next steps S503 and S504, the processor 300 determines a matrix representative of the achievable link conditions for the terminal $20_k$.

More precisely, the processor 300 determines at step S503, the matrix noted $R_{kn}$ which is the correlation matrix of interference and noise components for the terminal $20_k$ under process and the group of data $n$ under process. $R_{kn}$ is given by:

$$R_{kn} = \sum_{l=1}^{n-1} P_s^{(l)} H_k w_{lD} w_{lD}^H H_k^H + P_{kz} I .$$

$P_s^{(l)}$ is the power of the signal transferred by the base station 10 through its antennas BSAnt1 to BSAntN.

$H_k$ is the channel matrix between the terminal $20_k$ and the base station 10, $P_{kz}$ is the noise power matrix for the terminals 20.

The base station 10 has knowledge of the channel matrix $H_k$ and the noise power $P_{kz}$. Classically, each channel matrix $H_k$ is obtained by measuring the complex amplitude of pilot signals transmitted individually by the terminal $20_k$ on the uplink channel. The interference-plus-noise power $P_{kz}$ is reported by the terminal $20_k$ on the uplink channel. It has to be noted here that, instead of reporting the interference-plus-noise power $P_{kz}$, each the terminal $20_k$ reports other relevant parameters such as the signal to noise plus interference power ratio or any other channel quality indicators, from which the base station 10 can estimate the noise power $P_{kz}$. In a variant of realization the base station 10 uses presumable values of the interference-plus-noise power $P_{kz}$ instead of determining them from the reported values by the terminals 20.

At step S504, the processor 300 calculates the matrix noted $\Psi_{kn}$ representative of the achievable link conditions between the terminal $20_k$ and the base station 10 using the following formula :

$$\Psi_{kn} = U_n^H \tilde{H}_k^H R_{kn}^{-1} H_k U_n .$$

At next step S505, the processor 300 checks whether or not the variable $k$ is equal to $K$. If $k$ is different from $K$, the processor 300 moves to step S506 and increment the variable $k$ of one and returns to step S503 already described.

The processor 300 executes the loop comprising the steps S503 to S505 as far as a matrix representative of the achievable link conditions between each terminal $20_k$ and the base station 10 is determined.

Once a matrix representative of the achievable link conditions is determined for each terminal $20_k$, the processor 300 moves to step S507.

The steps S501 to S506 correspond to the determination of $K$ matrices, each matrix being representative of the achievable link conditions between the base station 10 and a terminal $20_k$.

At step S507, the processor 300 determines the terminal $20_k$ to which the $n$-th group of data under process has to be sent as the one which has the largest achievable signal to noise plus interference power ratio (SINR).

More precisely, the processor 300 determines, for the $n$-th group of data, the terminal noted $\hat{k}$ which satisfies the following formula:

$$\hat{k} = \arg_k \max f_k(\rho \langle \Psi_{kn} \rangle) ,$$

where $\rho \langle \cdot \rangle$ is the largest eigenvalue of the matrix $\langle \cdot \rangle$, $\arg_k$ max represents the terminal $20_k$ which has the largest value of $f_k(\rho \langle \Psi_{Kn} \rangle)$ and $f_k()$ is a priority function.

Preferably, $f_k()$ is the identity function.

In a first variant of realisation, $f_k()$ is equal to :

$$f_k(\rho(\Psi_{kn})) = \frac{\rho(\Psi_{kn})}{avgSNR_k} ,$$

where $avgSNR_k$ is the averaged Signal to Noise Ratio (SNR) over a long period of time or a wide frequency band.

In a second variant of realisation, $f_k()$ is equal to :

$$f_k(\rho(\Psi_{kn})) = \frac{\rho(\Psi_{kn})}{avgSNR_k} ,$$

where $M_k$ is the number of antennas of the terminal $20_k$.

It has to be noted here that, many different functions $f_k()$ can be used in the present invention. Such function $f_k()$ ntroduces some priority, according to certain criterion or criteria, in the determination of the terminal 20 to which the $n$-th group of data under process has to be sent.

At next step S508, the processor 300 determines the downlink weighting vector of the base station 10 $w_{nD}$ for the group of data $n$ under process using the following formula :

$$w_{nD} = e \langle \Psi_{kn} \rangle |_{k=\hat{k}} ,$$

where $e \langle \Psi_{kn} \rangle$ denotes the eigenvector corresponding to largest the eigenvalue of the matrix $\Psi_{kn}$ of the terminal $\hat{k}$ deter-

mined at step S507.

Thanks to steps S507 and S508, the processor 300 determines the terminal $\hat{k}$ which has to receive the *n*-th group of data and selects, for *n*-th group of data, the downlink weighting vector $w_{nD}$ of the base station 10 which maximizes the SINR of the terminal $\hat{k}$.

It has to be noted here that, if we consider that the *n*-th group of data is sent to the *k*-th terminal in the presence of an *n*-1-th group of data which has been previously determined by the spatial multiplexer 100, the *k*-th terminal's received signal is expressed as :

$$x_{kn}(p) = a_{kn} s_n(p) + z_{kn}^{(IN)}(p)$$

where $a_{kn} = \sqrt{P_s^{(n)}} H_k w_{nD}$ , *(IN)* means interference plus noise and $z_{kn}^{(IN)}(p)$ is the interference plus noise for the *p*-th sample of the received signal.

$$z_{kn}^{(IN)}(p) = \sum_{l=1}^{n-1} H_k w_{lD} \sqrt{P_s^{(l)}} s_l(p) + z_k(p)$$

where $z_k(p) = \left[ z_{k1}(p), \dots z_{kM_k}(p) \right]^T$ is is the $M_k \times 1$ interference plus noise vector at the terminal $20_k$ with a power $P_{kz} (E\left[ z_k(p) z_k(p)^H \right] = P_{kZ} I)$.

The terminal $20_k$ applies the weighting vector $v_{nD} = (R_{kn}^{-1} a_{kn})^*$ for the *n*-th group of data on each of the M received signals by the antennas MSAnt1 to MSAntM based on the minimum-mean-square-error weight.

Then, the signal to noise plus interference power ratio $\gamma_{kn}$ after weighting is expressed as:

$$\gamma_{kn} = \frac{E\left[ \left| v_{nD}^T a_{kn} \right|^2 \right]}{E\left[ \left| v_{nD}^T z_{kn}^{(IN)}(p) \right|^2 \right]} = P_S^{(n)} w_{nD}^H H_k^H R_{kn}^{-1} H_k w_{nD} \,.$$

Such formula shows that at step S507, determined terminal $20_k$ is the one which has the largest achievable signal to noise plus interference power ratio among the terminals 20.

As disclosed above, the spatial multiplexer 100 preferably imposes the downlink weighting vectors of the base station 10 determined for two groups of data which are transmitted to two different terminals 20 to be mutually orthogonal. The first to *(n-1)*-th groups of data being already determined, the *n*-th weight vector $w_{nD}$ satisfies the following equation:

$$w_{nD} = U_n w_{nD}$$

with $U_n = \left( I - \sum_{l=1}^{n-1} w_{lD} w_{lD}^H \right)$.

Then, the SINR $\gamma_{kn}$ of the terminal $20_k$ to which the *n*-th group of data is transferred is equal to :

$$y_{kn} = P_s^{(n)} w_{nD}^H \Psi_{kn} w_{nD}$$

where

$$\Psi_{kn} = U_n^H H_k^H R_{kn}^{-1} H_k U_n.$$

Since the eigenvectors of $\Psi_{kn}$ which correspond to non-zero eigenvalue are orthogonal to $w_{1D},...,W_{(n-1)D}$, $\gamma_{kn}$ is maximized to $P_s^{(n)} \rho\langle \Psi_{kn} \rangle$.

At next step S509, the processor 300 checks if the variable $n$ is equal to $N$. If $n$ is different from $N$, the processor 300 moves to step S510, increments the variable $n$ of one and move to step S501 in order to consider the next group of data.

As far as all the $N$ groups of data have not been processed, the processor 300 executes the loop made by the steps S501 to S510.

Once the $N$ groups of data have been processed, the processor 300 moves to step S511.

At next step S511, the processor 300 determines the expected SINR of each of the terminals 20 determined at step S507 as $P_s^{(n)} \ \rho\langle \Psi_{kn} \rangle|_{k=\hat{k}}$.

It has to be noted here that once the $n$-th group of data is determined, the spatial multiplexer 100 adds the $(n+1)$-th group of data in the presence of the first to $n$-th groups of data.

It has to be noted here that the received SINR of the $n$-th group of data is not modified after the $(n+1)$-th group of data is added. In the same manner, the received SINR of the determined group of data is kept even if more groups of data are added by the spatial multiplexer 100.

This characteristic is led by the orthogonality of the downlink weighting vectors $w_{nD}$ of the base station 10 disclosed above. Using this characteristic, the spatial multiplexer 100 decides the downlink weighting vectors $w_{nD}$ of the base station 10 and the terminal 20 which has to receive for the $n$-th group of data in the sequence $n$=1, ..., N without considering the effect of additional groups of data.

At next step S512, the processor 300 determines, for each of the terminals 20 determined at step S507, the modulation and coding scheme to be used by each of the determined terminals 20 for the downlink channel.

At next step S513, the processor 300 transfers the elements of the downlink weighting vectors $w_1$ to $w_N$ of the base station 10 determined at step S508 to the multiplication modules noted $Mul_{11D}$ to $Mul_{NND}$, transfers the ordered list of the determined terminals 20 at step S507 to an allocation module not shown in the Fig. 3 which selects, for each of the determined terminals 20, a group of data which has a destination address equals to the determined terminal 20.

The groups of data are then transferred by the base station 10.

It has to be noted here that, the information related to the modulation and the coding scheme to be used by determined terminals 20 for the downlink channel are also transferred in a time slot of the downlink channel.

Each of the determined terminal 20 receives pilot signals determines the downlink weighting vector based on the minimum-mean-square-error weight according to the following formula:

$$v_{nD} = (R_{kn}^{-1} a_{kn})^{\cdot}$$

with

$$a_{kn} = \sqrt{P_s^{(n)}} H_k w_{nD} $$

on each of the $M_k$ received signals by the antennas MSkAnt1 to MSkAntM.

Each terminal 20 checks in the received group of data, the destination terminal identifier. If the identifier corresponds to its one, the terminal 20 identifies the modulation and coding scheme to be used for the downlink channel.

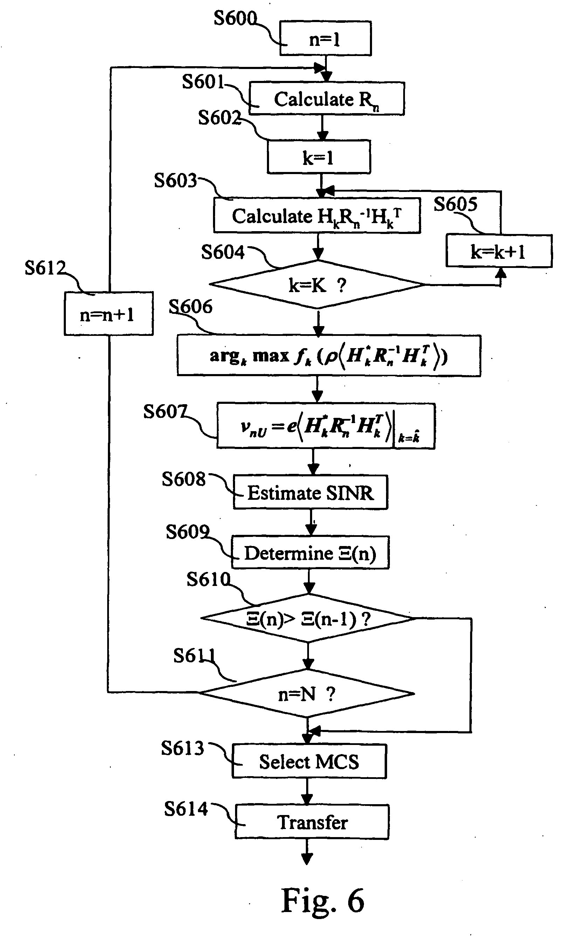

**Fig. 6** is an algorithm executed by the base station in order to determine the spatial multiplexing on the uplink channel according to the first mode of realisation of the present invention.

The base station 10 is able to receive simultaneously $nmax$ signals representatives of $nmax$ groups of data through the uplink channel. The base station 10 decides which terminal 20 has to transfer each of the group of data on the uplink channel.

If the terminal $20_k$ is determined to send the $n$-th group of data, the terminal $20_k$ performs beamforming based on a $M_k * 1$ weighting vector $v_{nU}$ transferred by the base station 10.

More precisely the present algorithm is executed by the processor 300 of the spatial multiplexer 100 of the base station 10.

At step S600, the processor 300 sets a variable noted $n$ to 1. The variable $n$ denotes the group of data under process.

At next step S601, the processor 300 calculates the correlation matrix $R_n$ of interference and noise components which is given by :

$$R_n = \sum_{l=1}^{n-1} P_s^{(l)} H_{k(l)}^T v_{lU} v_{lU}^H H_{k(l)}^* + R_{IN} \; ,$$

where $v_{lU}$ ($l$=1 to $n$-1) are the weighting vectors determined for the terminals 20 which have already been determined to send the first to $l$-th groups of data on the uplink channel, $H_k$ is the channel matrix between the terminal $20_k$ and the base station 10 and $Hk_{(l)}$ is the channel matrix between the second telecommunication device $k$ which has already been determined to send the $l$-th group of data and the first telecommunication device, ()$^*$ denotes the complex conjugate of

(), $R_{IN} = E\left[z_{IN}(p) z_{IN}^H(p)\right]$ , $z_{IN}(p) = [z_1(p),...,z_{Mk}(p)]$ is the interference plus noise component of the base station 10 and $p$ is the $p$-th received sample.

It has to be noted here that the base station 10 has knowledge of the channel matrix $Hk_{(l)}$ on the same manner as disclosed for $H_k$ in the Fig. 5.

At next step S602, the processor 300 sets the variable $k$ to one. The variable $k$ denotes an indicia of the terminal $20_k$ under process.

At next step S603, the processor 300 calculates the matrix representative of the achievable link conditions

between the terminal $20_k$ and the base station 10 using the following formula : $H_k^* R_n^{-1} H_k^T$ .

At next step S604, the processor 300 checks whether or not the variable $k$ is equal to $K$.

If $k$ is different from $K$, the processor 300 moves to step S605, increments $k$ of one and returns to steps S603.

As far as $k$ is different from $K$, the processor 300 executes the loop made by the steps S603 to S605.

If $k$ is equal to $K$, the processor 300 moves to step S606.

The steps S601 to S605 correspond to the determination of $K$ matrices, each matrix being representative of the achievable link conditions between the base station 10 and a terminal $20_k$.

At step S606, the processor 300 determines the terminal $20_k$ which has to transfer the $n$-th group of data under process as the one which has the largest achievable signal to noise plus interference power ratio (SINR).

More precisely, the processor 300 determines, for the $n$-th group of data, the terminal noted $\hat{k}$ which satisfies the following formula:

$$\hat{k} = \arg_k \max f_k(\rho\langle H_k^* R_n^{-1} H_k^T \rangle),$$

where $\rho\langle . \rangle$ is the largest eigenvalue of the matrix $\langle . \rangle$, $\arg_k \max$ represents the terminal $20_k$ which has the largest value

of $f_k()$ and $f_k(\rho\langle H_k^* R_n^{-1} H_k^T \rangle)$ is a priority function.

Preferably, $f_k$ () is the identity function.

In a first variant of realisation, $f_k()$ is equal to :

$$f_k(\rho(\Psi_{kn})) = \frac{\rho(H_k^* R_n^{-1} H_k^T)}{avgSNR_k} \; ,$$

where $avgSNR_k$ is the averaged Signal to Noise Ratio (SNR) over a long period of time or a wide frequency band.

In a second variant of realisation, $f_k()$ is equal to :

$$f_k(\rho(\Psi_{kn})) = \frac{\rho(H_k^* R_n^{-1} H_k^T)}{M_k},$$

where $M_k$ is the number of antennas of the terminal $20_k$.

It has to be noted here that, many different functions $f_k()$ can be used in the present invention. Such function $f_k()$ introduces some priority, according to certain criterion or criteria, in the determination of the terminal 20 to which the $n$-th group of data under process has to be sent.

At next step S607, the processor 300 determines the uplink weighting vector $v_{nU}$ of the determined terminal 20 for the group of data $n$ under process using the following formula :

$$v_{nU} = e\left\langle H_k^* R_n^{-1} H_k^T \right\rangle |_{k=\hat{k}},$$ where $e\left\langle H_k^* R_n^{-1} H_k^T \right\rangle |_{k=\hat{k}}$ denotes the eigenvector corresponding to largest the eigenvalue of the matrix $H_k^* R_n^{-1} H_k^T$ of the terminal $\hat{k}$ determined at step S606.

Thanks to steps S606 and S607, the processor 300 determines the terminal $\hat{k}$ which has to transfer the $n$-th group of data and selects an uplink weighting vector $v_{nU}$ for the determined terminal 20 and for the group of data $n$ under process which maximizes the SINR of the terminal $\hat{k}$.

The signal to be weighted prior to be transferred by the determined terminal 20 $s_n(p)$ which is related to the $n$-th group of data, has a power $P_s^{(n)}$ and $E_L|s_n(p)|^2 = 1$. The $p$-th sample $x_{BS}(p) = [x_{BS,1}(p),...,x_{BS,N}(p)]^T$ of the received group of data by the base station 10 is given by :

$$x_{BS}(p) = \sum_{n=1}^{n\,max} H_{k(n)}^T \sqrt{P_s^{(n)}} v_{nU} s_n(p) + z_{IN}(p),$$

where $k(n)$ is the terminal's identifier which is determined to send the $n$-th group of data, $z_{IN}(p) = [z_1(p),...,z_M(p)]^T$ is the interference plus noise at the base station 10 with $E\left[z_{IN}(p)z_{IN}^H(p)\right] = R_{IN}$.

Considering that the $n$-th group of data is sent by the $k$-th terminal in the presence of the first to $(n-1)$-th received groups of data, the $n$-th received group of data by the base station 10 is expressed as:

$$x_{BS}(p) = b_n s_n(p) + z_n(p),$$

where $z_n(p) = \sum_{l=1}^{n-1} b_l s_l(p) + z_{IN}(p)$, $b_l = \sqrt{P_s^{(l)}} H_{k(l)}^T v_{lU}$, $H_{k(l)}^*$ is the channel matrix between the terminal $20_k$ which has to transfer the $l$-th group of data and the base station 10 on the uplink channel.

The base station 10 performs beamforming on the received signals based on the minimum-mean-square-error weight, using $w_{nU} = (R_n^{-1} b_n)^*$ where $R_n$ is the correlation matrix calculated at step S601 and $b_n = \sqrt{P_s^{(n)}} H_{k(n)}^T v_{nU}$.

Then, the signal to noise plus interference power ratio $\gamma_{k \to n}$ after weighting is expressed as:

$$\gamma_{k \to n} = \frac{E\left[\left|w_{nU}^T b_n\right|^2\right]}{E\left[\left|w_{nU}^T z_n(p)\right|^2\right]} = P_s^{(n)} v_{nU}^H H_k^H R_n^{-1} H_k^T v_{nU}.$$

The SINR $\gamma_{k \to n}$ is maximized to $P_s^{(n)} \rho\left\langle H_k^* R_n^{-1} H_k^T \right\rangle$ using $v_{nU} = e\left\langle H_k^* R_n^{-1} H_k^T \right\rangle$.

Such formula shows that at step S606, the determined terminal $20_k$ is the one which has the largest achievable signal to noise plus interference power ratio among the terminals 20.

The *n*-th group of data may deteriorate the SINRs of previously determined first to (*n*-1)-th groups of data. The SINRs $\gamma_{1/n}$ of the *l*-th group of data with *l*=1 to *n* is given by :

$$\gamma_{l/n} = b_l^H (R_n - b_l b_l^H + b_n b_n^H)^{-1} b_l$$

At next step S608, the processor 300 estimates the achievable signal to noise plus interference power ratio SINR $\gamma_{l/n} = b_l^H (R_n - b_l b_l^H + b_n b_n^H)^{-1} b_l$ of the determined terminal $\hat{k}$.

At next step S609, the processor 300 determines a system evaluation function $\Xi(n)$ for the group of data under process.

As example, the system evaluation function $\Xi(n)$ is expressed by the throughput and is equal to $\sum_{l=1}^{n} T(\gamma_{l/n})$ , where $T(\gamma)$ represents the throughput of a group of data as a function of the received SINR $\gamma$.

As example and in a non limitative way, $T(\gamma)$ is implemented under the form of a lookup table stored in the ROM memory 302 of the base station 10. If the SINR is comprised between zero and one dB, the throughput is equal to 0.250. If the SINR is comprised between one and two dBs, the throughput is equal to 0.285. If the SINR is comprised between two and three dBs, the throughput is equal to 0.333. If the SINR is around twenty dBs, the throughput is equal to 3.00.

The steps S607 to S609 correspond to an evaluation of the system performance considering the uplink weighting vectors $v_{nU}$ for the determined terminals 20.

At next step S610, the processor 300 checks whether or not the system evaluation function $\Xi(n)$ for the group of data under process is upper than or equal to the evaluation function $\Xi(n\text{-}1)$ determined for the previous processed group of data.

If $\Xi(n)>\Xi(n\text{-}1)$, the processor 300 moves to step S611, otherwise the processor 300 moves to step S613. If $\Xi(n) \geq \Xi(n\text{-}1)$, *nmax* groups of data will be transferred simultaneously with *nmax*= *n*-1.

At step S611, the processor 300 checks if the variable *n* is equal to *N*. If *n* is different from *N,* the processor 300 moves to step S612, increments the variable *n* of one and returns to step S601. The processor 300 executes the loop made by the steps S601 to S612 as far as all the N groups of data have not been processed or if $\Xi(n) \geq \Xi(n\text{ -1})$.

If the variable *n* is equal to *N,* the processor 300 moves to step S613.

At step S613, the processor 300 determines, for each of the terminals 20 determined at step S606, the modulation and coding scheme to be used by the determined terminals 20 at step S606 for the uplink channel.

As example, if the SINR is comprised between zero and one dB, the modulation is QPSK modulation with a coding rate of 1/8. If the SINR is comprised between one and two dBs, the modulation is QPSK modulation with a coding rate of 1/7. If the SINR is comprised between two and three dBs, the modulation is QPSK modulation with a coding rate of 1/6. If the SINR is around twenty dBs, the modulation is 16QAM with a coding rate of ¾.

At step S614, the processor 300 transfers the ordered list of the determined terminals at step S606, the corresponding uplink weighting vectors $v_{nU}$ determined at step S607 for each of the terminals 20 comprised in the ordered list to an allocation module not shown in the Fig. 3. The allocation module inserts, as example within a timeslot of the downlink channel the ordered list of determined terminals 20 at step S606, the corresponding uplink weighting vectors $v_{nU}$ and information related to the modulation and coding scheme determined at step S613 for each determined terminal 20.

Such information are then transferred through the downlink channel.

In a variant of realisation, instead of transferring the uplink weighting vectors $v_{nU}$ determined at step S607 for each of the terminals 20 comprised in the ordered list to the allocation module, the processor 300 determines other downlink weighting vectors $w'_{nD}$ of the base station 10 as follow: the processor 300 transfers information related to the determined uplink weighting vector $v_{kU}$ to the terminal $20_k$ by weighting the transferred pilot signals to the terminal $20_k$ by downlink weighting vectors $w'_{nD}$ of the base station 10 which enable each determined terminal 20, using the weighted pilot signals to determine the uplink weighting vector $v_{kU}$. Such weighted pilot signals are transferred as example in a predetermined downlink time slot.

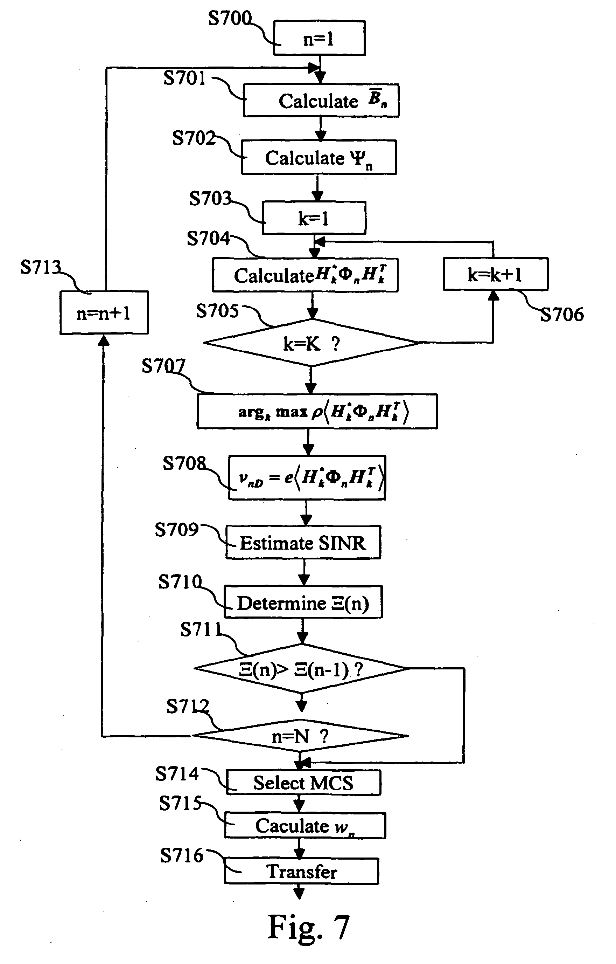

Fig. 7 is an algorithm executed by the base station in order to determine the spatial multiplexing on the downlink channel according to a second mode of realisation of the present invention.

The present algorithm is executed each time the base station 10 has to transfer simultaneously at most *N* groups of data to at least one of the terminals $20_1$ to $20_K$.

The base station 10 transfers simultaneously, through its N antennas, the signals representatives of *nmax* groups of data, wherein *nmax* $\leq$ *N.* The base station 10 calculates *K* matrices, each matrix being representative of the achievable link conditions between a terminal 20k and the base station 10 and determines which terminal or terminals 20 has to receive at least a group of data according to the calculated matrices.

According to the second mode of realisation of the invention, the base station 10, determines for each of the $nmax$ groups of data transferred simultaneously, a downlink weighting vector $w_{nD}$ of the base station 10, the element of which multiply each duplicated signal to be transferred and a downlink weighting vector $v_{nD}$ for each $n$-th group of data.

More precisely the present algorithm is executed by the processor 300 of the spatial multiplexer 100 of the base station 10.

At step S700, the processor 300 sets a variable noted $n$ to 1. The variable $n$ denotes the group of data under process.

At next step S701, the processor 300 calculates the matrix $\bar{B}_n$ according to the following formula : $\bar{B}_n = \left[ H_{k(l)}v_{1D}, ..., H_{k(n-1)}v_{(n-1)D,} \right]$, where $H_{k(l)}$ for $l$=1 to $n$-1 is the channel matrix between the terminal $20_k$ which have already been determined to send $l$-th group of data on the downlink channel and the base station 10 and $v_{lD}$ is the terminal downlink weighting vector determined for the $l$-th group of data.

It has to be noted here that the base station 10 has knowledge of the channel matrix $Hk_{(l)}$ on the same manner as disclosed for $H_k$ in the Fig. 5.

At next step S702, the processor 300 calculates a matrix $\Phi_n$ using the following formula :

$$\Phi_n = I - \bar{B}_n (\bar{B}_n^H \bar{B}_n)^{-1} \bar{B}^H$$, where $I$ is the identity matrix.

At next step S703, the processor 300 sets the variable $k$ to one. The variable $k$ denotes an indicia of the terminal $20_k$ under process.

At next step S704, the processor 300 calculates the matrix representative of the achievable link conditions between the terminal $20_k$ under process and the base station 10 using the following formula : $H_k^* \Phi_n H_k^T$ .

At next step S705, the processor 300 checks whether or not the variable $k$ is equal to $K$.

If $k$ is different from $K$, the processor 300 moves to step S706, increments $k$ of one and returns to steps S704.

As far as $k$ is different from $K$, the processor 300 executes the loop made by the steps S704 to S706.

If $k$ is equal to $K$, the processor 300 moves to step S707.

The steps S701 to S706 correspond to the determination of $K$ matrices, each matrix being representative of the achievable link conditions between the base station 10 and a terminal $20_k$.

At step S707, the processor 300 determines the terminal 20 to which the $n$-th group of data under process has to be sent as the one which has the largest achievable signal to noise plus interference power ratio.

More precisely, the processor 300 determines, for the $n$-th group of data, the terminal noted $\hat{k}$ which $H_k^* \Phi_n H_k^T$ satisfies the following formula:

$$\hat{k} = \arg_k \max \frac{P_s}{P_{kz}} f_k \rho \langle H_k^* \Phi_n H_k^T \rangle$$, where $\rho\langle . \rangle$ is the largest eigenvalue of the matrix $\langle . \rangle$, $\arg_k \max$ represents

the terminal noted $\hat{k}$ which has the largest value of $\frac{P_s}{P_{kz}} \rho \langle H_k^* \Phi_n H_k^T \rangle$ and $f_k$ is a priority coefficient.

$P_s$ is the power of the signal transferred by the base station 10 through its antennas BSAnt1 to BSAntN and $P_{kz}$ is the noise power matrix for the terminal $20_k$.

It has to be noted here that, if $f_k$ is equal to one, the radio resources are rarely allocated to a terminal 20 which has a large noise power.

In a variant of realization, $f_k$ denotes a priority coefficient allocated to the terminal $20_k$.

$f_k$ is preferably equal to: $f_k = \dfrac{1}{(P_s / P_{kz})M_k^\alpha}$ where $0 \le \alpha \le 1$.

Using such priority coefficient $f_k$, the present algorithm is efficient when some terminals 20 have a reduced number of antennas in comparison with other terminals 20. Even if terminals 20 have the same $\dfrac{P_s}{P_{kz}}$, a terminal 20 which has more antennas has on average larger eigenvalue $\rho \langle H_k^* \Phi_n H_k^T \rangle$ thanks to the terminal's signal weighting.

Using the power $\alpha$, a priority can be given according to the number of antennas a terminal 20 has. A priority can then be given to a terminal 20 which has a reduced number of $M_k$ antennas.

At next step S708, the processor 300 calculates the downlink weighting vector $v_{nD}$ to be used by the determined terminal 20 for the $n$-th group of data using the following formula :

$$v_{nD} = e\left\langle H_k^* \Phi_n H_k^T \right\rangle$$ , where $k$ is the indicia of the determined terminal 20 at step S707, $e\left\langle H_k^* \Phi_n H_k^T \right\rangle$

denotes the eigenvector corresponding to largest the eigenvalue of the matrix $H_k^* \Phi_n H_k^T$ of the terminal 20 determined at step S707.

Thanks to steps S706 and S707, the processor 300 determines the terminal $\hat{k}$ which has to receive the $n$-th group of data and selects a downlink weighting vector $v_{nD}$ for the determined terminal 20 and for the group of data $n$ under process which maximizes the SINR of the terminal $\hat{k}$.

At next step S709, the processor 300 determines the achievable SINR of the determined terminal 20 using the following formula : $\gamma_n = \dfrac{P_s}{P_{k(n)z}} v_n H_k^* \Phi_n H_k v_{nD}$.

$H_k$ is the channel matrix of the determined terminal $20_k$ at step S707.

At next step S710, the processor 300 determines a system evaluation function $\Xi(n)$ for the group of data under process.

As example, the system evaluation function $\Xi(n)$ is expressed by the throughput and is equal to $\displaystyle\sum_{l=1}^{n} T(\gamma_l)$ where $T(\gamma_l)$ represents the throughput of a group of data as a function of the SINR $\gamma_l$. $T(\gamma_l)$ is similar as the one disclosed at step S609, it will not be described anymore.

The steps S708 to S710 correspond to an evaluation of the system performance considering the uplink weighting vectors $v_{nD}$ for the determined terminals 20.

At next step S711, the processor 300 checks whether or not the system evaluation function $\Xi(n)$ for the group of data under process is upper than or equal to the evaluation function $\Xi(n-1)$ determined for the previous processed group of data.

If $\Xi(n)>\Xi(n-1)$, the processor 300 moves to step S712, otherwise the processor 300 moves to step S714. If $\Xi(n) \geq \Xi(n-1)$, $nmax$ group of data will be transferred simultaneously with $nmax= n$-1.

At step S712, the processor 300 checks if the variable $n$ is equal to $N$. If $n$ is different from $N$, the processor 300 moves to step S713, increments the variable $n$ of one and returns to step S701. The processor 300 executes the loop made by the steps S701 to S713 as far as all the N groups of data have not been processed or if $\Xi(n) \geq \Xi(n-1)$.

If the variable $n$ is equal to $N$, the processor 300 moves to step S714.

At step S714, the processor 300 determines, for each of the terminals 20 determined at step S707 the modulation and coding scheme to be used by the determined terminals 20 for the downlink channel. Such determination is as example, as the one disclosed at step S613 of the Fig. 6.

At step S715 the processor 300 determines the base station downlink weighting vectors $w_{nD}$ which have to be used for the respective the $nmax$ groups of data to be transferred simultaneously as follow :

$$\sqrt{P_s}\left[w_{1D},...,w_{n\max D}\right] = P'\left\{(BB^H)^{-1}B\right\},$$

where $P' = diag\left[\sqrt{P_s'^{(1)}}, \sqrt{P_s'^{(2)}}, ..., \sqrt{P_s'^{(n\max)}}\right],$

$B = [b_1,...,b_{n\max}],$

$b_l = H_{k(l)}^T v_{lD}$ for $l$=1 to $nmax$ with $\|v_{lD}\| = 1$.

$H_{k(l)}$ is the channel matrix between the terminal $20_k$ and the base station 10 which have been determined to receive the $l$-th group of data on the downlink channel and $v_{lD}$ is the terminal downlink weighting vector determined for the $l$-th group of data.

It has to be noted here that, *setting n = nmax* and using the relation $B^T[w_{1D},...,w_{nD}]=P'/P_s$, we have:

$$v_{nD}(H_{k(n)}w_{lD}) = (H_{k(n)}^T v_{nD})^T w_{lD} = b_n^T w_{lD} = \sqrt{P_s'^{(n)}/P_s}$$

for $l=n$ and 0 otherwise.

This means that the determined terminal 20 does not receive any interference from other transferred groups of data at the same time. Based on the downlink weighting vectors $v_{nD}$, the terminal $20_k$ has a signal to noise ratio which is equal to :

$$\gamma_{k \leftarrow n} = \frac{v_{nD}^{T} H_{k(n)} w_{n}}{P_{kz} \|v_{nD}\|^{2}} = \frac{P_{s}^{'(n)}}{P_{kz}}$$

Such formula shows that at step S707, the determined terminal $20_k$ is the one which has the largest achievable signal to noise plus interference power ratio among the terminals 20.

From

$$\sqrt{P_s}[w_{1D}, ..., w_{nD}] = P' \{(BB^H)^{-1} B\}^* \text{ and } \|w_{nD}\| = 1 ,$$

$$P_s = P_s w_{nD}^H w_{nD} = P_s^{'(n)} d_n^H (B^H B)^{-1} d_n$$

$d_n = [0,0,...,1]^T$.

Therefore, $P_s = P_s^{'(n)} d_n^H (B^H B)^{-1} d_n$

At next step S716, the processor 300 transfers the elements of the downlink weighting vectors $w_l$ to $w_{nmax}$ of the base station 10 determined at step S715 to the multiplication modules noted $Mul_{11}$ to $Mul_{NN}$, transfers the ordered list of the determined terminals 20 at step S707 to an allocation module not shown in the Fig. 3. The allocation module selects, for each of the determined terminal 20, a group of data which has a destination address equals to the determined terminal 20.

The groups of data are then transferred by the base station 10.

It has to be noted here that, the information related to the modulation and the coding scheme to be used by determined terminals 20 for the downlink channel are also transferred in a time slot of the downlink channel.

Each of the determined terminal 20 receives pilot signals and determines the downlink weighting vector based on the minimum-mean-square-error weight.

Each terminal 20 checks in the received group of data the destination terminal identifier and if the identified corresponds to its one, the terminal 20 identifies the modulation and coding scheme used for the downlink channel and reads the data.

Naturally, many modifications can be made to the embodiments of the invention described above without departing from the scope of the present invention.

## Claims

1. Method for controlling the transfer of signals representatives of a group of data in a wireless telecommunication network (15) comprising a first telecommunication device (10) linked through plural second telecommunication devices (20) through the wireless network, the first telecommunication device comprising at least two antennas (BSAnt1, BSAntN), at least one of the second telecommunication devices comprising at least two antennas (MSAnt1, MSAntM), **characterised in that** the method comprises the steps executed by the first telecommunication device of:

   - calculating (S401) at least two information, each information being representative of the achievable link conditions between the first telecommunication device and one second telecommunication device,
   - determining (S402) which second telecommunication device, among the at least two second telecommunication devices, is involved in the transfer of the group of data through the link according to the determined information,
   - determining (S403) at least a weighting vector to be used for the transfer of the group of data, the elements of the weighting vector weighting the signals representatives of the group of data transferred through at least two antennas.

2. Method according to claim 1, **characterized in that** the determination of the second device involved in the transfer of the group of data through the link is made also according to the number of antennas of each second telecommunication device.

3. Method according to claim 1 or 2, **characterised in that** each information representative of the achievable link conditions between the first telecommunication device and one second telecommunication device is a matrix representative of the achievable link conditions between the first telecommunication device and the second telecommunication device.

4. Method according to any of the claims 1 to 3, **characterised in that** the method comprises further step of determining the modulation and coding scheme to be used by the second telecommunication device involved in the transfer of the group of data.

5. Method according to claim 4, **characterised in that** the determination of the modulation and coding scheme to be used by the second telecommunication device involved in the transfer of the group of data is made using the determined weighting vector.

6. Method according to any of the claims 1 to 5, **characterised in that** the determined second telecommunication device is the second telecommunication device which is expected to receive signals representatives of the group of data transferred by the first telecommunication device.

7. Method according to any of the claims 1 to 5, **characterised in that** the at least one weighting vector to be used for the transfer of the group of data, is a weighting vector which weights the signals representatives of the group of data transferred by the first telecommunication device.

8. Method according to claim 7, **characterised in that** the first telecommunication device comprises $N$ antennas, at most $N$ groups of data are transferred simultaneously through the N antennas, and **in that** it is determined successively, for each group of data of the at most N groups of data, the second telecommunication device involved in the transfer of the group of data and the weighting vector to be used for the transfer of the group of data.

9. Method according to claim 8, **characterised in that** the second telecommunication device involved in the transfer of a group of data is determined by:

   - calculating a matrix $U_n$ using the following formula :

$$U_n = \left( I - \sum_{l=1}^{n-1} w_{lD} w_{lD}^H \right),$$

wherein $I$ is the identity matrix, $n$ is the identifier of the group of data for which the control of the transfer of the signals representatives of the group of data is currently done, $l=1$ to $n$-1 are the identifiers of the groups of data for which the control of the transfer of the signals representatives of the group of data is already done, $w_{lD}$ is the weighting vector which weights the signals transferred by the first telecommunication device determined for the $l$-th group of data, $()^H$ is the complex conjugate transpose of (),
   - calculating, for each second telecommunication device $k$, with $k=1$ to $K$, $K$ being the number of second telecommunication devices, a matrix $R_{kn}$ which is the correlation matrix of interference and noise components for the second telecommunication device $k$, $R_{kn} = \sum_{l=1}^{n-1} P_s^{(l)} H_k w_{lD} w_{lD}^H H_k^H + P_{kz} I$ , where $P_s^{(l)}$ is the power of the signal transferred by the first telecommunication device through its $N$ antennas for the $l$-th group of data, $H_k$ is the channel matrix between the second telecommunication device $k$ and the first telecommunication device, $P_{kz}$ is the noise power matrix for the second telecommunication devices,

   - calculating, for each second telecommunication device $k$, a matrix $\Psi_{kn} = U_n^H H_k^H R_{kn}^{-1} H_k U_n$ which is representative of the achievable link conditions between the first telecommunication device and the second telecommunication device $k$,
   - determining among the $K$ second telecommunication devices, the second telecommunication device $\hat{k}$ as one

involved in the transfer of the group of data which satisfies the following formula :

$$\hat{k} = \arg_k \max f_k(\rho\langle \Psi_{kn}\rangle),$$

where $\rho\langle . \rangle$ is the largest eigenvalue of the matrix $\langle . \rangle$, $\arg_k$ max represents the second telecommunication device $k$ which has the largest value of $f_k(\langle \Psi_{kn}\rangle)$, $f_k()$ is a priority function.

10. Method according to claim 9, **characterized in that** the priority function $f_k()$ is the identity function or a function which weights the largest eigenvalue of the matrix $\Psi_{kn}$ by an averaged Signal to Noise Ratio over a long period of time or a wide frequency band or by the number of antennas of the second telecommunication device.

11. Method according to claim 9 or 10, **characterised in that** the weighting vector which weights the signals representatives of the group of data is determined for each group of data according to the following formula :

$$w_{nD} = e\langle \Psi_{kn}\rangle, \text{ where } e\langle \Psi_{kn}\rangle$$

is the eigenvector corresponding to the largest eigenvalue of the matrix $\Psi_{kn}$ of the second telecommunication device involved in the transfer of the $n$-th group of data.

12. Method according to any of the claims 8 to 11, **characterised in that** the method comprises further step of determining, for each determined second telecommunication device which is expected to receive signals representatives of the group of data, an achievable signal to noise plus interference power ratio from the determined weighting vector which weights the signals representatives of the group of data transferred to the second telecommunication device.

13. Method according to any of the claims 1 to 5, **characterised in that** the determined second telecommunication device is the second telecommunication device which is expected to transfer signals representatives of the group of data to the first telecommunication device.

14. Method according to claim 13, **characterised in that** the at least one weighting vector to be used for the transfer of the group of data, is a weighting vector which weights the signals representatives of the group of data transferred by the second telecommunication device.

15. Method according to claim 14, **characterised in that** the first telecommunication device comprises $N$ antennas, at most $N$ groups of data are received simultaneously through the $N$ antennas, and **in that** it is determined successively, for each group of data of the at most $N$ groups of data, the second telecommunication device involved in the transfer of the group of data and the weighting vector to be used for the transfer of the group of data.

16. Method according to claim 15, **characterised in that** the second telecommunication device involved in the transfer of a group of data is determined by:

- calculating the correlation matrix $R_n$ of interference and noise components which is given by :

$$R_n = \sum_{l=1}^{n-1} P_s^{(l)} H_{k(l)}^T v_{lU} v_{lU}^H H_{k(l)}^* + R_{lN},$$

where $n$ is the identifier of the group of data for which the control of the transfer of the signals representatives of the group of data is currently done, $l=1$ to $n$-1 are the identifiers of the groups of data for which the control of the transfer of the signals representatives of the groups of data is already done, $v_{lU}$ is the weighting vector which weights the signals representatives of the group of data transferred by the second telecommunication device $k$ determined for the $l$-th group of data, with $k=1$ to $K$, $K$ is the number of second telecommunication devices, $()^T$ is the transpose of (), $()^H$ is the complex conjugate transpose of (), $H_k$ is the channel matrix between the second telecommunication device $k$ and the first telecommunication device, $Hk_{(l)}$ is the channel matrix between the second telecommunication device k which has already been determined to send the *l*-th group of data and the first telecommunication device, ()* is the complex conjugate of (),

$$R_{IN} = E\left[z_{IN}(p)z_{IN}^H(p)\right] \,,\; z_{IN}(p) = \left[z_1(p),...,z_{Mk}(p)\right]$$ is the interference plus noise components of the first telecommunication device and *p* is the *p*-th received sample, $P_s^{(l)}$ is the power of the signal transferred by the second telecommunication device through its <u>M</u> antennas for the *l*-th group of data,

- calculating, for each second telecommunication device *k*, a matrix $H_k^* R_n^{-1} H_k^T$ which is representative of the achievable link conditions between the first telecommunication device and the second telecommunication device *k*,
- determining among the *K* second telecommunication devices, the second telecommunication device $\hat{k}$ as the one involved in the transfer of the group of data which satisfies the following formula :

$$\hat{k} = \arg_k \max f_k(\rho\langle \overline{H_k^* R_n^{-1} H_k^T}\rangle),$$

where $\rho\langle.\rangle$ is the largest eigenvalue of the matrix $\langle.\rangle$, $\arg_k$ max represents the second telecommunication device

*k* which has the largest value of $f_k(\rho\langle H_k^* R_n^{-1} H_k^T\rangle)$, $f_k$() is a priority function.

17. Method according to claim 16, **characterized in that** the priority function $f_k$() is the identity function or a function which weights the largest eigenvalue of the matrix $H_k^* R_n^{-1} H_k^T$ by an averaged Signal to Noise Ratio over a long period of time or a wide frequency band or by the number of antennas of the second telecommunication device.

18. Method according to claim 16 or 17, **characterised in that** the weighting vector which weights the signals representatives of the group of data is determined for each group of data according to the following formula :

$$v_{nU} = e\langle H_k^* R_n^{-1} H_k^T\rangle, \text{ where } e\langle H_k^* R_n^{-1} H_k^T\rangle$$

is the eigenvector corresponding to largest eigenvalue of the matrix $H_k^* R_n^{-1} H_k^T$ of the second telecommunication device involved in the transfer of the *n*-th group of data.

19. Method according to any of the claims 16 to 18, **characterised in that** the method comprises further step of determining, for each determined second telecommunication device, an achievable signal to noise plus interference power ratio from the determined weighting vector which weights the signals representatives of the group of data transferred to the second telecommunication device.

20. Method according to claim 19, **characterised in that** the method comprises further step of evaluating, for each determined second telecommunication device, of the system performance considering the determined weighting vector for the determined second telecommunication device.

21. Method according to claim 1 to 6, **characterised in that** two weighting vectors are determined, a weighting vector $w_{nD}$ which weights the signals representatives of the group of data transferred by the first telecommunication device and a weighting vector $v_{nD}$ which weights the signals representatives of the group of data received by the second telecommunication device.

22. Method according to claim 21, **characterised in that** the first telecommunication device comprises *N* antennas, at most *N* groups of data are received simultaneously through the *N* antennas, and **in that** it is determined successively, for each group of data of the at most *N* groups of data, the second telecommunication device involved in the transfer of the group of data and the weighting vector to be used for the transfer of the group of data.

**23.** Method according to claim 22, **characterised in that** the second telecommunication device involved in the transfer of a group of data is determined by:

- calculating a matrix $\overline{B}_n = \lfloor H_{k(1)}v_{1D},...,H_{k(n-1)}v_{(n-1)D,}\rfloor$, $n$ is the identifier of the group of data for which the control of the transfer of the signals representatives of the group of data is currently done, $l$=1 to $n$-1 are the identifiers of the groups of data for which the control of the transfer of the signals representatives of the group of data is already done where $H_{k(l)}$ is the channel matrix of the second telecommunication $k$ which is expected to receive signals representatives of the $l$-th group of data transferred by the first telecommunication device, $v_{lD}$ is the weighting vector which weights the signals representatives of the group of data determined for the $l$-th group of data,

- calculating a matrix $\Phi_n = I - \overline{B}_n(\overline{B}_n^H \overline{B}_n)^{-1}\overline{B}^H$ , where $I$ is the identity matrix,

- calculating, for each second telecommunication device $k$, $k$=1 to $K$, $K$ is the number of second telecommunication devices, a matrix $H_k^*\Phi_n H_k^T$ which is representative of the achievable link conditions between the first telecommunication device and the second telecommunication device $k$,

- determining among the $K$ second telecommunication devices, the second telecommunication device $\hat{k}$ as the one involved in the transfer of the group of data which satisfies the following formula :

$$\hat{k} = \arg_k \max \frac{P_s}{P_{kz}} f_k \rho\langle H_k^*\Phi_n H_k^T\rangle,$$

where $\rho\langle.\rangle$ is the largest eigenvalue of the matrix $\langle.\rangle$, $\arg_k$ max represents the second telecommunication device $k$ which has the largest value of $\frac{P_s}{P_{kz}}\rho\langle H_k^*\Phi_n H_k^T\rangle$, $f_k$ is a priority coefficient, $P_s$ is the power of the signals transferred by the first telecommunication device and $P_{kz}$ is the noise power matrix for the second telecommunication devices.

**24.** Method according to claim 23, **characterised in that** the weighting vector $v_{nD}$ which weights the signals representatives of the group of data transferred by the second telecommunication device is calculating using the following formula: $v_{nD} = e\langle H_k^*\Phi_n H_k^T\rangle$ ,

**25.** Method according to any of the claims 22 to 24, **characterised in that** the method comprises further step of evaluating, for each determined second telecommunication device, of the system performance considering the determined weighting vector for the determined second telecommunication device.

**26.** Method according to claim 21, **characterised in that** each weighting vector $w_{nD}$ which weights the signals transferred by the first telecommunication device to the determined second telecommunication device for the $n$-th group of data is calculating using the following formula:

$$\sqrt{P_s}[w_{1D},...,w_{n\max D}] = P'\{(BB^H)^{-1}B\}^*,$$

where $P' = diag\lfloor\sqrt{P_s'^{(1)}},\sqrt{P_s'^{(2)}},...,\sqrt{P_s'^{(n\max)}}\rfloor$,

$B = [b_1,...,b_{n\max}]$,

$b_l = H_{k(l)}^T v_{lD}$ for $l$=1 to $nmax$ with $\|v_{lD}\| = 1$ and $nmax$ is the number of group of data transferred simultaneously.

**27.** Telecommunication device (10) which controls the transfer of signals representatives of a group of data in a wireless telecommunication network (15), the telecommunication device being linked to plural other telecommunication devices (20) through the wireless network, the telecommunication device comprising at least two antennas (BSant1, BSAntN), at least one of the other telecommunication devices comprising at least two antennas (MSAntl, MSAntM), **characterised in that** the telecommunication device comprises:

- means (100, 300) for calculating at least two information, each information being representative of the achievable link conditions between the telecommunication device and one other telecommunication device,
- means (100, 300) for determining which other telecommunication device among the at least two other telecommunication devices is involved in the transfer of the group of data through the link according to the determined information,
- means (100, 300) for determining at least a weighting vector to be used for the transfer of the group of data, the elements of the weighting vector weighting the signals representatives of the group of data transferred through at least two antennas.

**28.** Computer program which can be directly loadable into a programmable device, comprising instructions or portions of code for implementing the steps of the method according to claims 1 to 26, when said computer program is executed on a programmable device.

**Patentansprüche**

**1.** Verfahren zum Steuern des Transfers von Signalen, die eine Gruppe von Daten darstellen, in einem drahtlosen Telekommunikationsnetzwerk (15) mit einer ersten Telekommunikationsvorrichtung (10), verbunden über mehrere zweite Telekommunikationsvorrichtungen (20), über das drahtlose Netzwerk, wobei die erste Telekommunikationsvorrichtung wenigstens zwei Antennen (BSAnt1, BSAntN) aufweist, wobei wenigstens eine der zweiten Telekommunikationsvorrichtungen wenigstens zwei Antennen (MSAnt1, MSAntM) aufweist, **dadurch gekennzeichnet, dass** das Verfahren die durch die erste Telekommunikationsvorrichtung ausgeführten folgenden Schritte aufweist:

- Berechnen (S401) von wenigstens zwei Informationen, wobei jede Information die erreichbaren Verbindungszustände zwischen der ersten Telekommunikationsvorrichtung und einer zweiten Telekommunikationsvorrichtung darstellt,
- Bestimmen (S402), welche zweite Telekommunikationsvorrichtung unter den wenigstens zwei zweiten Telekommunikationsvorrichtungen bei dem Transfer der Gruppe von Daten über die Verbindung beteiligt ist, gemäß der bestimmten Information,
- Bestimmen (S403) von wenigstens einem Gewichtungsvektor, um für den Transfer der Gruppe von Daten verwendet zu werden, wobei die Elemente des Gewichtungsvektors die Signale gewichten, die die Gruppe von durch wenigstens zwei Antennen transferierten Daten darstellen.

**2.** Verfahren nach Anspruch 1, **dadurch gekennzeichnet, dass** die Bestimmung der bei dem Transfer der Gruppe von Daten über die Verbindung beteiligten zweiten Vorrichtung auch gemäß der Anzahl von Antennen jeder zweiten Telekommunikationsvorrichtung durchgeführt wird.

**3.** Verfahren nach Anspruch 1 oder 2, **dadurch gekennzeichnet, dass** jede Information, die die erreichbaren Verbindungszustände zwischen der ersten Telekommunikationsvorrichtung und einer zweiten Telekommunikationsvorrichtung darstellt, eine Matrix ist, die die erreichbaren Verbindungszustände zwischen der ersten Telekommunikationsvorrichtung und der zweiten Telekommunikationsvorrichtung darstellt.

**4.** Verfahren nach einem der Ansprüche 1 bis 3, **dadurch gekennzeichnet, dass** das Verfahren weiterhin einen Schritt zum Bestimmen des Modulations- und Codierschemas aufweist, um durch die bei dem Transfer der Gruppe von Daten beteiligte zweite Telekommunikationsvorrichtung verwendet zu werden.

**5.** Verfahren nach Anspruch 4, **dadurch gekennzeichnet, dass** die Bestimmung des Modulations- und Codierschemas, um durch die bei dem Transfer der Gruppe von Daten beteiligte zweite Telekommunikationsvorrichtung verwendet zu werden, unter Verwendung des bestimmten Gewichtungsvektors durchgeführt wird.

**6.** Verfahren nach einem der Ansprüche 1 bis 5, **dadurch gekennzeichnet, dass** die bestimmte zweite Telekommunikationsvorrichtung die zweite Telekommunikationsvorrichtung ist, für welche erwartet wird, dass sie Signale empfängt, die die durch die erste Telekommunikationsvorrichtung transferierte Gruppe von Daten darstellen.

7. Verfahren nach einem der Ansprüche 1 bis 5, **dadurch gekennzeichnet, dass** der wenigstens eine Gewichtungsvektor, um für den Transfer der Gruppe von Daten verwendet zu werden, ein Gewichtungsvektor ist, der die Signale gewichtet, die die durch die erste Telekommunikationsvorrichtung transferierte Gruppe von Daten darstellen.

8. Verfahren nach Anspruch 7, **dadurch gekennzeichnet, dass** die erste Telekommunikationsvorrichtung N Antennen aufweist, höchstens N Gruppen von Daten gleichzeitig durch die N Antennen transferiert werden und dass für jede Gruppe von Daten der höchstens N Gruppen von Daten aufeinander folgend die bei dem Transfer der Gruppe von Daten beteiligte zweite Telekommunikationsvorrichtung und der für den Transfer der Gruppe von Daten zu verwendende Gewichtungsvektor bestimmt werden.

9. Verfahren nach Anspruch 8, **dadurch gekennzeichnet, dass** die bei dem Transfer einer Gruppe von Daten beteiligte zweite Kommunikationsvorrichtung bestimmt wird durch:

   - Berechnen einer Matrix $U_n$ unter Verwendung der folgenden Formel:

$$U_n = \left( I - \sum_{l=1}^{n-1} w_{lD} w_{lD}^H \right),$$

wobei I die Identitätsmatrix ist, n der Identifizierer der Gruppe von Daten ist, für welche die Steuerung des Transfers der Signale, die die Gruppe von Daten darstellen, aktuell durchgeführt wird, l=1 bis n-1 die Identifizierer der Gruppen von Daten sind, für welche die Steuerung des Transfers der Signale, die die Gruppe von Daten darstellen, bereits durchgeführt ist, $w_{lD}$ der Gewichtungsvektor ist, der die durch die für die I-te Gruppe von Daten bestimmten erste Telekommunikationsvorrichtung transferierten Signale gewichtet, $()^H$ die komplexe konjugierte Transposition von () ist,
   - Berechnen für jede zweite Telekommunikationsvorrichtung k, mit k=1 bis K, wobei K die Anzahl von zweiten Telekommunikationsvorrichtungen ist, einer Matrix $R_{kn}$, die die Korrelationsmatrix von Interferenz- und Rauschkomponenten für die zweite Telekommunikationsvorrichtung k ist, $R_{kn} = \sum_{l=1}^{n-1} P_s^{(l)} H_k w_{lD} w_{lD}^H H_k^H + P_{kz} I$ ,

wobei $P_s^{(l)}$ die Leistung des durch die erste Telekommunikationsvorrichtung über ihre N Antennen für die I-te Gruppe von Daten transferierten Signals ist, $H_k$ die Kanalmatrix zwischen der zweiten Telekommunikationsvorrichtung k und der ersten Telekommunikationsvorrichtung ist, $P_{kz}$ die Rauschleistungsmatrix für die zweiten Telekommunikationsvorrichtungen ist,

   - Berechnen für jede zweite Telekommunikationsvorrichtung k einer Matrix $\Psi_{kn} = U_n^H H_k^H R_{kn}^{-1} H_k U_n$ , welche die erreichbaren Verbindungszustände zwischen der ersten Telekommunikationsvorrichtung und der zweiten Telekommunikationsvorrichtung k darstellt,
   - unter den K zweiten Telekommunikationsvorrichtungen Bestimmen der zweiten Telekommunikationsvorrichtung $\hat{k}$ als eine bei dem Transfer der Gruppe von Daten beteiligte, die die folgende Formel erfüllt:

$$\hat{k} = \arg_k \max f_k\left(\rho\langle\Psi_{kn}\rangle\right),$$

wobei $\rho\langle.\rangle$ der größte Eigenwert der Matrix $\langle.\rangle$ ist, $\arg_k$ max die zweite Telekommunikationsvorrichtung k darstellt, die den größten Wert von $f_k(\langle\Psi_{kn}\rangle)$, hat, $f_k()$ eine Prioritätsfunktion ist.

10. Verfahren nach Anspruch 9, **dadurch gekennzeichnet, dass** die Prioritätsfunktion $f_k()$ die Identitätsfunktion ist, oder eine Funktion, die den größten Eigenwert der Matrix $\Psi_{kn}$ mit einem einer Durchschnittsbildung unterzogenen Signal-zu-Rausch-Verhältnis über eine lange Zeitperiode oder ein weites Frequenzband oder mit der Anzahl von Antennen der zweiten Telekommunikationsvorrichtung gewichtet.

**11.** Verfahren nach Anspruch 9 oder 10, **dadurch gekennzeichnet, dass** der Gewichtungsvektor, der die Signale gewichtet, die die Gruppe von Daten darstellen, für jede Gruppe von Daten gemäß der folgenden Formel bestimmt wird:

$$w_{nD} = e\langle \Psi_{kn} \rangle,$$

wobei $e\langle \Psi_{kn} \rangle$ der Eigenvektor entsprechend dem größten Eigenwert der Matrix $\Psi_{kn}$ der bei dem Transfer der n-ten Gruppe von Daten beteiligten zweiten Kommunikationsvorrichtung ist.

**12.** Verfahren nach einem der Ansprüche 8 bis 11, **dadurch gekennzeichnet, dass** das Verfahren weiterhin einen Schritt zum Bestimmen eines erreichbaren Signal-zu-Rausch-Plus-Interferenz-Leistungsverhältnisses aus dem bestimmten Gewichtungsvektor, der die Signale gewichtet, die die Gruppe von Daten darstellen, die zu der zweiten Telekommunikationsvorrichtung transferiert sind, für jede bestimmte zweite Telekommunikationsvorrichtung, für die erwartet wird, dass sie Signale empfängt, die die Gruppen von Daten darstellen, aufweist.

**13.** Verfahren nach einem der Ansprüche 1 bis 5, **dadurch gekennzeichnet, dass** die bestimmte zweite Telekommunikationsvorrichtung die zweite Telekommunikationsvorrichtung ist, für die erwartet wird, dass sie Signale, die die Gruppe von Daten darstellen, zu der ersten Telekommunikationsvorrichtung transferiert.

**14.** Verfahren nach Anspruch 13, **dadurch gekennzeichnet, dass** der wenigstens eine für den Transfer der Gruppe von Daten zu verwendende Gewichtungsvektor ein Gewichtungsvektor ist, der die Signale gewichtet, die die durch die zweite Telekommunikationsvorrichtung transferierte Gruppe von Daten darstellen.

**15.** Verfahren nach Anspruch 14, **dadurch gekennzeichnet, dass** die erste Telekommunikationsvorrichtung N Antennen aufweist, höchstens N Gruppen von Daten gleichzeitig durch die N Antennen empfangen werden und dass für jede Gruppe von Daten der höchstens N Gruppen von Daten aufeinander folgend die bei dem Transfer der Gruppe von Daten beteiligte zweite Telekommunikationsvorrichtung und der für den Transfer der Gruppe von Daten zu verwendende Gewichtungsvektor bestimmt werden.

**16.** Verfahren nach Anspruch 15, **dadurch gekennzeichnet, dass** die bei dem Transfer einer Gruppe von Daten beteiligte zweite Telekommunikationsvorrichtung bestimmt wird durch:

- Berechnen der Korrelationsmatrix $R_n$ von Interferenz- und Rauschkomponenten, die gegeben ist durch:

$$R_n = \sum_{l=1}^{n-1} P_s^{(l)} H_{k(l)}^T v_{lU} v_{lU}^H H_{k(l)}^* + R_{lN},$$

wobei n der Identifizierer der Gruppe von Daten ist, für welche die Steuerung des Transfers der Signale, die die Gruppe von Daten darstellen, aktuell durchgeführt wird, l=1 bis n-1 die Identifizierer der Gruppen von Daten sind, für welche die Steuerung des Transfers der Signale, die die Gruppen von Daten darstellen, bereits durchgeführt ist, $v_{lU}$ der Gewichtungsvektor ist, der die Signale gewichtet, die die Gruppe von Daten darstellen, die durch die zweite Telekommunikationsvorrichtung k transferiert ist, die für die l-te Gruppe von Daten bestimmt ist, mit k=1 bis K, wobei K die Anzahl von zweiten Telekommunikationsvorrichtungen ist, $()^T$ die Transposition von () ist, $()^H$ die komplexe konjugierte Transposition von () ist, $H_k$ die Kanalmatrix zwischen der zweiten Telekommunikationsvorrichtung k und der ersten Telekommunikationsvorrichtung ist, $Hk_{(l)}$ die Kanalmatrix zwischen der zweiten Telekommunikationsvorrichtung k, die bereits zum Senden der l-ten Gruppe von Daten bestimmt worden ist, und der ersten Telekommunikationsvorrichtung ist, $()^*$ die komplexe Konjugierte von () ist, $R_{lN} = E\left[ z_{lN}(p) z_{lN}^H(p) \right]$, $z_{lN}(p) = \left[ z_1(p), ..., z_{Mk}(p) \right]$ die Interferenz-plus-Rauschen-Komponenten der ersten Telekommunikationsvorrichtung ist und p die p-te empfangene Abtastung ist, $P_s^{(l)}$ die Leistung des durch die zweite Telekommunikationsvorrichtung durch ihre M Antennen für die l-te Gruppe von Daten transferierten Signals ist,

- für jede zweite Telekommunikationsvorrichtung k Berechnen einer Matrix $H_k^{\bullet} R_n^{-1} H_k^{T}$ , die die erreichbaren Verbindungszustände zwischen der ersten Telekommunikationsvorrichtung und der zweiten Telekommunikationsvorrichtung darstellt,

- unter den K zweiten Telekommunikationsvorrichtungen Bestimmen der zweiten Telekommunikationsvorrichtung $\hat{k}$ als diejenige, die bei dem Transfer der Gruppe von Daten beteiligt ist, welche die folgende Formel erfüllt:

$$\hat{k} = \arg_k \max f_k \left( \rho \left\langle H_k^{\bullet} R_n^{-1} H_k^{T} \right\rangle \right),$$

wobei $\rho\langle .\rangle$ der größte Eigenwert der Matrix $\langle .\rangle$ ist, $\arg_k$ max die zweite Telekommunikationsvorrichtung k darstellt, die den größten Wert von $f_k \left( \rho \left\langle H_k^{\bullet} R_n^{-1} H_k^{T} \right\rangle \right)$ hat, $f_k()$ eine Prioritätsfunktion ist.

17. Verfahren nach Anspruch 16, **dadurch gekennzeichnet, dass** die Prioritätsfunktion $f_k()$ die Identitätsfunktion ist, oder eine Funktion, die den größten Eigenwert der Matrix $H_k^{\bullet} R_n^{-1} H_k^{T}$ mit einem einer Durchschnittsbildung unterzogenen Signal-zu-Rausch-Verhältnis über eine lange Zeitperiode oder ein weites Frequenzband oder mit der Anzahl von Antennen der zweiten Telekommunikationsvorrichtung gewichtet.

18. Verfahren nach Anspruch 16 oder 17, **dadurch gekennzeichnet, dass** der Gewichtungsvektor, der die Signale gewichtet, die die Gruppe von Daten darstellen, für jede Gruppe von Daten gemäß der folgenden Formel bestimmt wird:

$$\upsilon_{nU} = e < H_k^{\bullet} R_n^{-1} H_k^{T} >,$$

wobei $e < H_k^{\bullet} R_n^{-1} H_k^{T} >$ der Eigenvektor entsprechend einem größten Eigenwert der Matrix $H_k^{\bullet} R_n^{-1} H_k^{T}$ der bei dem Transfer der n-ten Gruppe von Daten beteiligten zweiten Telekommunikationsvorrichtung ist.

19. Verfahren nach einem der Ansprüche 16 bis 18, **dadurch gekennzeichnet, dass** das Verfahren weiterhin einen Schritt zum Bestimmen eines erreichbaren Signal-zu-Rausch-plus-Interferenz-Leistungsverhältnisses aus dem bestimmten Gewichtungsvektor, der die Signale gewichtet, die die Gruppe von Daten darstellen, die zu der zweiten Telekommunikationsvorrichtung transferiert sind, für jede bestimmte zweite Telekommunikationsvorrichtung aufweist.

20. Verfahren nach Anspruch 19, **dadurch gekennzeichnet, dass** das Verfahren weiterhin einen Schritt zum Auswerten der Systemleistung unter Berücksichtigung des bestimmten Gewichtungsvektors für die bestimmte zweite Telekommunikationsvorrichtung für jede bestimmte zweite Telekommunikationsvorrichtung aufweist.

21. Verfahren nach Anspruch 1 bis 6, **dadurch gekennzeichnet, dass** zwei Gewichtungsvektoren bestimmt werden, nämlich ein Gewichtungsvektor $w_{nD}$, der die Signale gewichtet, die die Gruppe von Daten darstellen, die durch die erste Telekommunikationsvorrichtung transferiert sind, und ein Gewichtungsvektor $v_{nD}$, der die Signale gewichtet, die die Gruppe von Daten darstellen, die durch die zweite Telekommunikationsvorrichtung empfangen sind.

22. Verfahren nach Anspruch 21, **dadurch gekennzeichnet, dass** die erste Telekommunikationsvorrichtung N Antennen aufweist, höchstens N Gruppen von Daten gleichzeitig durch die N Antennen empfangen werden und dass für jede Gruppe von Daten der höchstens N Gruppen von Daten die bei dem Transfer der Gruppe von Daten beteiligte zweite Telekommunikationsvorrichtung und der für den Transfer der Gruppe von Daten zu verwendende Gewichtungsvektor aufeinander folgend bestimmt werden.

23. Verfahren nach Anspruch 22, **dadurch gekennzeichnet, dass** die bei dem Transfer einer Gruppe von Daten beteiligte zweite Telekommunikationsvorrichtung bestimmt wird durch:

- Berechnen einer Matrix $\overline{B}_n = {}_{L}H_{k(1)}v_{1D},...,H_{k(n-1)}v_{(n-1)D,}\rfloor$, wobei n der Identifizierer der Gruppe von Daten ist, für welche die Steuerung des Transfers der Signale, die die Gruppe von Daten darstellen, aktuell durchgeführt wird, l=1 bis n-1 die Identifizierer der Gruppen von Daten sind, für welche die Steuerung des Transfers der Signale, die die Gruppe von Daten darstellen, bereits durchgeführt ist, wobei $H_{k(l)}$ die Kanalmatrix der zweiten Telekommunikationsvorrichtung k ist, für welche erwartet wird, dass sie Signale empfängt, die die I-te Gruppe von Daten darstellen, die durch die erste Telekommunikationsvorrichtung transferiert ist, $v_{ID}$ der Gewichtungsvektor ist, der die Signale gewichtet, die die Gruppe von Daten darstellen, die für die I-te Gruppe von Daten bestimmt sind,

- Berechnen einer Matrix $\Phi_n = I - \overline{B}n(\overline{B}_n^H \overline{B}_n)^{-1}\overline{B}^H$ , wobei I die Identitätsmatrix ist,

- Berechnen, für jede zweite Telekommunikationsvorrichtung k, mit k=1 bis K, wobei K die Anzahl zweiter Telekommunikationsvorrichtungen ist, einer Matrix $H_k^{\bullet}\Phi_n H_k^T$ , welche die erreichbaren Verbindungszustände zwischen der ersten Telekommunikationsvorrichtung und der zweiten Telekommunikationsvorrichtung k darstellt,

- unter den K zweiten Telekommunikationsvorrichtungen Bestimmen der zweiten Telekommunikationsvorrichtung $\hat{k}$ als diejenige, die bei dem Transfer der Gruppe von Daten beteiligt ist, welche die folgende Formel erfüllt:

$$\hat{k} = \arg_k \max \frac{P_s}{P_{kz}} f_k \rho\left\langle H_k^{\bullet}\Phi_n H_k^T \right\rangle ,$$

wobei $\rho\langle.\rangle$ der größte Eigenwert der Matrix (.) ist, $\arg_k$ max die zweite Telekommunikationsvorrichtung k darstellt, die den größten Wert von $\dfrac{P_s}{P_{kz}}\rho\left\langle H_k^{\bullet}\Phi_n H_k^T \right\rangle$ hat, $f_k$ ein Prioritätskoeffizient ist, $P_s$ die Leistung der durch die erste Telekommunikationsvorrichtung transferierten Signale ist und $P_{kz}$ die Rauschleistungsmatrix für die zweiten Telekommunikationsvorrichtungen ist.

24. Verfahren nach Anspruch 23, **dadurch gekennzeichnet, dass** der Gewichtungsvektor $v_{nD}$, der die Signale gewichtet, die die Gruppe von Daten darstellen, die durch die zweite Telekommunikationsvorrichtung transferiert sind, unter Verwendung der folgenden Formel berechnet: $v_{nD} = e\left\langle H_k^{\bullet}\Phi_n H_k^T \right\rangle$ , wobei $e\left\langle H_k^{\bullet}\Phi_n \overline{H}_k^T \right\rangle$ der Eigenvektor entsprechend dem größten Eigenwert der Matrix $H_k^{\bullet}\Phi_n H_k^T$ der bei dem Transfer der n-ten Gruppe von Daten beteiligten zweiten Telekommunikationsvorrichtung ist.

25. Verfahren nach einem der Ansprüche 22 bis 24, **dadurch gekennzeichnet, dass** das Verfahren weiterhin einen Schritt zum Auswerten der Systemleistung unter Berücksichtigung des bestimmten Gewichtungsvektors für die bestimmte zweite Telekommunikationsvorrichtung für jede bestimmte zweite Telekommunikationsvorrichtung aufweist.

26. Verfahren nach Anspruch 21, **dadurch gekennzeichnet, dass** jeder Gewichtungsvektor $w_{nD}$, der die Signale gewichtet, die durch die erste Telekommunikationsvorrichtung zu der bestimmten zweiten Telekommunikationsvorrichtung transferiert sind, für die n-te Gruppe von Daten unter Verwendung der folgenden Formel berechnet:

$$\sqrt{P_s}\left[w_{1D},...,w_{n\,max\,D}\right] = P'\left\{\left(BB^H\right)^{-1}B\right\}^{\bullet} ,$$

wobei $P' = \text{diag}\left\lfloor \sqrt{P_s^{'(1)}}, \sqrt{P_s^{'(2)}}, ..., \sqrt{P_s^{'(n\,max)}}, \right\rfloor$

$B = [b_1,...,b_{n\,max}]$,

$b_l = H_{k(l)}^T v_{lD}$ für l=1 bis nmax mit $\|v_{lD}\| = 1$ und nmax die Anzahl einer Gruppe von Daten ist, die gleichzeitig transferiert werden.

**27.** Telekommunikationsvorrichtung (10), die den Transfer von Signalen steuert, die eine Gruppe von Daten darstellen, in einem drahtlosen Telekommunikationsnetzwerk (15), wobei die Telekommunikationsvorrichtung mit mehreren anderen Telekommunikationsvorrichtungen (20) durch das drahtlose Netzwerk verbunden ist, wobei die Telekommunikationsvorrichtung wenigstens zwei Antennen (BSAnt1, BSAntN) aufweist, wobei wenigstens eine der anderen Telekommunikationsvorrichtungen wenigstens zwei Antennen (MSAnt1, MsAntM) aufweist, **dadurch gekennzeichnet, dass** die Telekommunikationsvorrichtung folgendes aufweist:

- eine Einrichtung (100, 300) zum Berechnen von wenigstens zwei Informationen, wobei jede Information die erreichbaren Verbindungszustände zwischen der Telekommunikationsvorrichtung und einer anderen Telekommunikationsvorrichtung darstellt,
- eine Einrichtung (100, 300) zum Bestimmen, welche andere Telekommunikationsvorrichtung unter den wenigstens zwei anderen Telekommunikationsvorrichtungen bei dem Transfer der Gruppe von Daten durch die Verbindung beteiligt ist, gemäß der bestimmten Information,
- eine Einrichtung (100, 300) zum Bestimmen von wenigstens einem Gewichtungsvektor, um für den Transfer der Gruppe von Daten verwendet zu werden, wobei die Elemente des Gewichtungsvektors die Signale gewichten, die die durch wenigstens zwei Antennen transferierte Gruppe von Daten darstellen.

**28.** Computerprogramm, das direkt in eine programmierbare Vorrichtung ladbar sein kann, mit Anweisungen oder Bereichen eines Codes zum Implementieren der Schritte des Verfahrens gemäß den Ansprüchen 1 bis 26, wenn das Computerprogramm auf einer programmierbaren Vorrichtung ausgeführt wird.


**Revendications**

**1.** Procédé pour contrôler le transfert de signaux représentatifs d'un groupe de données dans un réseau de télécommunication sans fil (15) comprenant un premier dispositif de télécommunication (10) relié à plusieurs second dispositifs de télécommunication (20) par l'intermédiaire du réseau sans fil, le premier dispositif de télécommunication comportant au moins deux antennes (BSAnt1, BSAntN), au moins un des second dispositifs de télécommunication comportant au moins deux antennes (MSAnt1, MSAntM), **caractérisé en ce que** le procédé comporte les étapes, exécutées par le premier dispositif de télécommunication, de :

- calcul (S401) d'au moins deux informations, chaque information étant représentative des conditions réalisables sur le lien entre le premier dispositif de télécommunication et un second dispositif de télécommunication,
- détermination du second dispositif de télécommunication, parmi les aux moins deux second dispositifs de télécommunication, qui est impliqué dans le transfert du groupe de données à travers le lien en fonction des informations déterminées,
- détermination d'au moins un vecteur de pondération devant être utilisé pour le transfert du groupe de données, les éléments du vecteur de pondération pondérant les signaux représentatifs du groupe de données transféré par l'intermédiaire des au moins deux antennes.

**2.** Procédé selon la revendication 1, **caractérisé en ce que** la détermination du second dispositif de télécommunication impliqué dans le transfert du groupe de données à travers le lien est effectuée en fonction du nombre d'antennes de chaque second dispositif de télécommunication.

**3.** Procédé selon la revendication 1 ou 2, **caractérisé en ce que** chaque information représentative des conditions réalisables sur le lien entre le premier dispositif de télécommunication et un second dispositif de télécommunication est une matrice représentative des conditions réalisables sur le lien entre le premier dispositif de télécommunication et le second dispositif de télécommunication.

**4.** Procédé selon l'une quelconque des revendications 1 à 3, **caractérisé en ce que** le procédé comporte l'étape supplémentaire de détermination de la modulation et du codage devant être utilisés par le second dispositif de télécommunication impliqué dans le transfert du groupe de données.

**5.** Procédé selon la revendication 4, **caractérisé en ce que** la détermination de la modulation et du codage devant être utilisés par le second dispositif de télécommunication impliqué dans le transfert du groupe de données est effectuée à partir du vecteur de pondération déterminé.

**6.** Procédé selon l'une quelconque des revendications 1 à 5, **caractérisé en ce que** le second dispositif de télécommunication déterminé est le second dispositif de télécommunication qui est supposé recevoir les signaux représentatifs du groupe de données transféré par le premier dispositif de télécommunication.

**7.** Procédé selon l'une quelconque des revendications 1 à 5, **caractérisé en ce que** le au moins un vecteur de pondération devant être utilisé pour le transfert du groupe de données, est un vecteur de pondération qui pondère les signaux représentatifs du groupe de données transféré par le premier dispositif de télécommunication.

**8.** Procédé selon la revendication 7, **caractérisé en ce que** le premier dispositif de télécommunication comporte $N$ antennes, au maximum $N$ groupes de données sont transférés simultanément par l'intermédiaire des $N$ antennes, et **en ce que** il est déterminé successivement, pour chaque groupe de données des au maximum $N$ groupes de données, le second dispositif de télécommunication impliqué dans le transfert du groupe de données et le vecteur de pondération devant être utilisé pour le transfert du groupe de données.

**9.** Procédé selon la revendication 8, **caractérisé en ce que** le second dispositif de télécommunication impliqué dans le transfert du groupe de donnée est déterminé en :

- calculant une matrice $U_n$ à partir de la formule suivante $U_n = \left( I - \sum_{l=1}^{n-1} w_{lD} w_{lD}^H \right)$, dans laquelle $I$ est la matrice identité, $n$ est l'identifiant du groupe de données pour lequel le contrôle du transfert des signaux représentatifs du groupe de données est en cours, $l$=1 à $n$-1 sont les identifiants des groupes de données pour lesquels le contrôle du transfert des signaux représentatifs du groupe de données a déjà été réalisé, $w_{lD}$ est le vecteur de pondération déterminé pour le $l$-ième groupe de données qui pondère les signaux transférés par le premier dispositif de télécommunication, $()^H$ est la transposée conjuguée complexe de (),
- calcul, pour chaque second dispositif de télécommunication $k$, avec $k$=1 à $K$, $K$ étant le nombre de second dispositifs de télécommunication, d'une matrice $R_{kn}$ de corrélation des composantes d'interférence et de bruit pour le second dispositif de télécommunication $k$, $R_{kn} = \sum_{l=1}^{n-1} P_s^{(l)} H_k w_{lD} w_{lD}^H H_k^H + P_{kz} I$ , où $P_s^{(l)}$ est

la puissance du signal transféré par le premier dispositif de télécommunication par l'intermédiaire de ses N antennes pour le $l$-ième groupe de données, $H_k$ est la matrice de canal entre le second dispositif de télécommunication $k$ et le premier dispositif de télécommunication, $P_{kz}$ est la matrice de puissance de bruit pour le second dispositifs de télécommunication $k$,

- calcul, pour chaque second dispositif de télécommunication $k$, d'une matrice $\Psi_{kn} = U_n^H H_k^H R_{kn}^{-1} H_k U_n$

qui est représentative des conditions réalisables sur le lien entre le premier dispositif de télécommunication et le second dispositif de télécommunication $k$,
- détermination, parmi les $K$ second dispositifs de télécommunication, du second dispositif de télécommunication $\hat{k}$ qui satisfait la formule suivante comme impliqué dans le transfert du groupe de données :

$$\hat{k} = \arg_k \max f_k (\rho \langle \Psi_{kn} \rangle) \, ,$$

où $\rho\langle . \rangle$ est la plus grande valeur propre de la matrice $\langle . \rangle$, $\arg_k$ max représente le second dispositif de télécommunication $k$ qui a la valeur la plus grande de $f_k (\langle \Psi_{kn} \rangle)$, $f_k ()$ est une fonction de priorité.

**10.** Procédé selon la revendication 9, **caractérisé en ce que** la fonction de priorité $f_k ()$ est la fonction identité ou une fonction qui pondère la plus grande valeur propre de la matrice $\Psi_{kn}$ par une moyenne de rapport signal à bruit sur une longue période de temps ou sur une bande de fréquence large ou par le nombre d'antennes du second dispositif de télécommunication.

**11.** Procédé selon la revendication 9 ou 10, **caractérisé en ce que** le vecteur de pondération qui pondère les signaux représentatifs du groupe de données est déterminé pour chaque groupe de données selon la formule suivante :

$$w_{nD} = e \langle \Psi_{kn} \rangle, \text{ où } e \langle \Psi_{kn} \rangle$$

est le vecteur propre qui correspond à la plus grande valeur propre de la matrice $\Psi_{kn}$ du second dispositif de télécommunication impliqué dans le transfert du $n$-ième groupe de données.

12. Procédé selon l'une quelconque des revendications 8 à 11, **caractérisé en ce que** le procédé comporte l'étape supplémentaire de détermination, pour chaque second dispositif de télécommunication déterminé supposé recevoir les signaux représentatifs du groupe de données, d'un rapport de puissance signal à bruit plus interférence réalisable à partir du vecteur de pondération déterminé qui pondère les signaux représentatifs du groupe de données transférés au second dispositif de télécommunication.

13. Procédé selon l'une quelconque des revendications 1 à 5, **caractérisé en ce que** le second dispositif de télécommunication déterminé est le second dispositif de télécommunication qui est supposé transférer les signaux représentatifs du groupe de données au premier dispositif de télécommunication.

14. Procédé selon la revendication 13, **caractérisé en ce que** le au moins un vecteur de pondération à utiliser pour le transfert du groupe de données est un vecteur de pondération qui pondère les signaux représentatifs du groupe de données transféré par le second dispositif de télécommunication.

15. Procédé selon la revendication 14, **caractérisé en ce que** le premier dispositif de télécommunication comporte N antennes, au maximum N groupes de données sont transférés simultanément par l'intermédiaire des N antennes, et **en ce que** il est déterminé successivement, pour chaque groupe de données des au maximum N groupes de données, le second dispositif de télécommunication impliqué dans le transfert du groupe de données et le vecteur de pondération devant être utilisé pour le transfert du groupe de données.

16. Procédé selon la revendication 15, **caractérisé en ce que** le second dispositif de télécommunication impliqué dans le transfert du groupe de données est déterminé par :

- calcul de la matrice de corrélation $R_n$ des composantes d'interférence et de bruit qui est donnée par :

$$R_n = \sum_{l=1}^{n-1} P_s^{(l)} H_{k(l)}^T v_{lU} v_{lU}^H H_{k(l)}^* + R_{IN} \quad ,$$

où $n$ est l'identifiant du groupe de données pour lequel le contrôle du transfert des signaux représentatifs du groupe de données est en cours, $l$=1 à $n$-1 sont les identifiants des groupes de données pour lesquels le contrôle du transfert des signaux représentatifs du groupe de données a déjà été réalisé, $v_{lU}$ est le vecteur de pondération déterminé pour le $l$-ième groupe de données qui pondère les signaux transférés par le second dispositif de télécommunication $k$, avec $k$=1 à $K$, $K$ étant le nombre de second dispositifs de télécommunication, $()^T$ est la transposée de (), $()^H$ est la transposée conjuguée complexe de $()$,$H_k$ est la matrice de canal entre le second dispositif de télécommunication $k$ et le premier dispositif de télécommunication, $H_{k(l)}$ est la matrice de canal entre le second dispositif de télécommunication $k$ qui a déjà été déterminé pour envoyer le $l$-ième groupe de données et le premier dispositif de télécommunication, $()^*$ est le conjugué complexe de (),

$R_{IN} = E\left[z_{IN}(p) z_{IN}^H(p)\right]$ , $z_{IN}(p)=[z_1(p),...,z_{Mk}(p)]$ est la composante interférence plus bruit du premier dispositif de télécommunication et $p$ est $p$-ième échantillon reçu, $P_s^{(l)}$ est la puissance du signal transféré par le second dispositif de télécommunication par l'intermédiaire de ses $M$ antennes pour le $l$-ième groupe de données,

- calcul, pour chaque second dispositif de télécommunication $k$, d'une matrice $H_k^* R_n^{-1} H_k^T$ qui est représentative des conditions réalisables sur le lien entre le premier dispositif de télécommunication et le second dispositif de télécommunication $k$,

- détermination, parmi les $K$ second dispositifs de télécommunication, du second dispositif de télécommunication $\hat{k}$ qui satisfait la formule suivante comme impliqué dans le transfert du groupe de données :

$$\hat{k} = \arg_k \max f_k(\rho\langle H_k^* R_n^{-1} H_k^T \rangle),$$

où $\rho\langle.\rangle$ est la plus grande valeur propre de la matrice $\langle.\rangle$, $\arg_k$ max représente le second dispositif de télécommunication $k$ qui a la valeur la plus grande de $f_k(\rho\langle H_k^* R_n^{-1} H_k^T \rangle)$, $f_k()$ est une fonction de priorité.

**17.** Procédé selon la revendication 16, **caractérisé en ce que** la fonction de priorité $f_k()$ est la fonction identité ou une fonction qui pondère la plus grande valeur propre de la matrice $H_k^* R_n^{-1} H_k^T$ par une moyenne de rapport signal à bruit sur une longue période de temps ou sur une bande de fréquence large ou par le nombre d'antennes du second dispositif de télécommunication.

**18.** Procédé selon la revendication 16 ou 17, **caractérisé en ce que** le vecteur de pondération qui pondère les signaux représentatifs du groupe de données est déterminé pour chaque groupe de données selon la formule suivante :

$$v_{nU} = e\langle H_k^* R_n^{-1} H_k^T \rangle, \text{ où } e\langle H_k^* R_n^{-1} H_k^T \rangle$$

est le vecteur propre qui correspond à la plus grande valeur propre de la matrice $H_k^* R_n^{-1} H_k^T$ du second dispositif de télécommunication impliqué dans le transfert du $n$-ième groupe de données.

**19.** Procédé selon l'une quelconque des revendications 16 à 18, **caractérisé en ce que** le procédé comporte l'étape supplémentaire de détermination, pour chaque second dispositif de télécommunication déterminé, d'un rapport de puissance signal à bruit plus interférence réalisable à partir du vecteur de pondération déterminé qui pondère les signaux représentatifs du groupe de données transféré au second dispositif de télécommunication.

**20.** Procédé selon la revendication 19, **caractérisé en ce que** le procédé comporte l'étape supplémentaire d'évaluation, pour chaque second dispositif de télécommunication déterminé, de la performance du système à partir du vecteur de pondération déterminé pour le second dispositif de télécommunication déterminé.

**21.** Procédé selon l'une quelconque des revendications 1 à 6, **caractérisé en ce que** deux vecteurs de pondération sont déterminés, un vecteur de pondération $w_{nD}$ qui pondère les signaux représentatifs du groupe de données transféré par le premier dispositif de télécommunication et un vecteur de pondération $v_{nD}$ qui pondère les signaux représentatifs du groupe de données reçu par le second dispositif de télécommunication.

**22.** Procédé selon la revendication 21, **caractérisé en ce que** le premier dispositif de télécommunication comporte $N$ antennes, au maximum $N$ groupes de données sont transférés simultanément par l'intermédiaire des $N$ antennes, et **en ce que** il est déterminé successivement, pour chaque groupe de données des au maximum $N$ groupes de données, le second dispositif de télécommunication impliqué dans le transfert du groupe de données et le vecteur de pondération devant être utilisé pour le transfert du groupe de données.

**23.** Procédé selon la revendication 22, **caractérisé en ce que** le second dispositif de télécommunication impliqué dans le transfert du groupe de données est déterminé par :

- calcul d'une matrice $\overline{B}_n =\ _{\llcorner} H_{k(1)} v_{1D},...,H_{k(n-1)} v_{(n-1)D,}{}^{\lrcorner}$, $n$ est l'identifiant du groupe de données pour lequel le contrôle du transfert des signaux représentatifs du groupe de données est en cours, $l$=1 à $n$-1 sont les identifiants des groupes de données pour lesquels le contrôle du transfert des signaux représentatifs du groupe de données a déjà été réalisé, où $H_{k(l)}$ est la matrice de canal du second dispositif de télécommunication $k$ qui est supposé recevoir les signaux représentatifs du $l$-ième groupe de données transféré par le premier dispositif de télécommunication, $v_{lD}$ est le vecteur de pondération déterminé pour le $l$-ième groupe de données qui pondère les signaux représentatifs du $l$-ième groupe de données,

- calcul d'une matrice $\Phi_n = I - \overline{B}_n (\overline{B}_n^H \overline{B}_n)^{-1} \overline{B}^H$, où $I$ est la matrice identité,

- calcul, pour chaque second dispositif de télécommunication $k$, avec $k$=1 à $K$, $K$ étant le nombre de second dispositifs de télécommunication, d'une matrice $H_k^* \Phi_n H_k^T$ qui est représentative des conditions réalisables sur le lien entre le premier dispositif de télécommunication et le second dispositif de télécommunication $k$,

- calcul, pour chaque second dispositif de télécommunication $k$, d'une matrice $H_k^* R_n^{-1} H_k^T$ qui est représentative des conditions réalisables sur le lien entre le premier dispositif de télécommunication et le second dispositif de télécommunication $k$,

- détermination, parmi les $K$ second dispositifs de télécommunication, du second dispositif de télécommunication $\hat{k}$ qui satisfait la formule suivante comme impliqué dans le transfert du groupe de données :

$$\hat{k} = \arg_k \max \frac{P_s}{P_{kz}} f_k \rho \left\langle H_k^* \Phi_n H_k^T \right\rangle ,$$

où $\rho\langle . \rangle$ est la plus grande valeur propre de la matrice $\langle . \rangle$, $\arg_k \max$ représente le second dispositif de télécommunication $k$ qui a la valeur la plus grande de $\dfrac{P_s}{P_{kz}} \rho \left\langle H_k^* \Phi_n H_k^T \right\rangle$, $f_k$ est un coefficient de priorité, $P_s$ est la puissance des signaux transférés par le premier dispositif de télécommunication et $P_{kz}$ est la matrice de puissance de bruit pour les second dispositifs de télécommunication.

**24.** Procédé selon la revendication 23, **caractérisé en ce que** le vecteur de pondération $v_{nD}$ qui pondère les signaux représentatifs du groupe de données transféré par le second dispositif de télécommunication est calculé selon la formule suivante :

$$v_{nD} = e \left\langle H_k^* \Phi_n H_k^T \right\rangle , \text{ où } e \left\langle H_k^* \Phi_n H_k^T \right\rangle$$

est le vecteur propre qui correspond à la plus grande valeur propre de la matrice $H_k^* \Phi_n H_k^T$ du second dispositif de télécommunication impliqué dans le transfert du $n$-ième groupe de données.

**25.** Procédé selon l'une quelconque des revendications 22 à 24, **caractérisé en ce que** le procédé comporte l'étape supplémentaire d'évaluation, pour chaque second dispositif de télécommunication déterminé, de la performance du système à partir du vecteur de pondération déterminé pour le second dispositif de télécommunication déterminé.

**26.** Procédé selon la revendication 23, **caractérisé en ce que** chaque vecteur de pondération $w_{nD}$ qui pondère les signaux transférés par le premier dispositif de télécommunication au second dispositif de télécommunication déterminé pour le $n$-ième groupe de données est calculé selon la formule suivante:

$$\sqrt{P_s} \left[ w_{1D}, ...., w_{n\max D} \right] = P' \left\{ (BB^H)^{-1} B \right\}^* ,$$

où $P' = diag \left[ \sqrt{P_s^{'(1)}} , \sqrt{P_s^{'(2)}} , ...., \sqrt{P_s^{'(n\max)}} \right]$,

$B = [b_1,...,b_{n\max}]$,

$b_l = H_{k(l)}^T v_{lD}$ pour $l$=1 à $nmax$ avec $\|v_{lD}\| = 1$ et $nmax$ est le nombre de groupe de données transférés simultanément.

**27.** Dispositif de télécommunication (10) qui contrôle le transfert de signaux représentatifs d'un groupe de données dans un réseau de télécommunication sans fil (15), le dispositif de télécommunication (10) étant relié à plusieurs autres dispositifs de télécommunication (20) par l'intermédiaire du réseau sans fil, le dispositif de télécommunication comportant au moins deux antennes (BSAnt1, BSAntN), au moins un des autres dispositifs de télécommunication comportant au moins deux antennes (MSAnt1, MSAntM), **caractérisé en ce que** le dispositif de télécommunication comporte :

- des moyens (100, 300) de calcul d'au moins deux informations, chaque information étant représentative des conditions réalisables sur le lien entre le dispositif de télécommunication et un autre dispositif de télécommunication,

- des moyens (100, 300) de détermination de l'autre dispositif de télécommunication, parmi les aux moins deux autres dispositifs de télécommunication, qui est impliqué dans le transfert du groupe de données à travers le lien en fonction des informations déterminées,

- des moyens (100, 300) de détermination d'au moins un vecteur de pondération devant être utilisé pour le transfert du groupe de données, les éléments du vecteur de pondération pondérant les signaux représentatifs du groupe de données transféré par l'intermédiaire des au moins deux antennes.

28. Programme d'ordinateur qui peut être directement chargé dans un dispositif programmable, comprenant les instructions ou portions de code mettant en oeuvre les étapes du procédé selon les revendications 1 à 26, lorsque ledit programme d'ordinateur est exécuté sur le dispositif programmable.

Fig. 1

Fig. 3

Fig. 2

S400 — n=1

S401 — Calculate information representative of link conditionsfor at least two terminals

S402 — Determine the terminal involved in the transfer of the group of data

S405 — n=n+1

S403 — Determine weigthing vector

S403 — Evaluate system performance considering weighting vector

S404 — OK ?

S406 — Determine modulation and coding scheme (MCS)

Fig. 4

S500 — n=1

S501 — Calculate U$_n$

S502 — k=1

S503 — Calculate R$_{kn}$

S504 — Calculate Ψ$_{kn}$

S506 — k=k+1

S505 — k=K ?

S510 — n=n+1

S507 — $\arg_k \max f_k(\rho \langle \Psi_{kn} \rangle)$

S508 — $w_n = e \langle \Psi_{kn} \rangle |_{k=\hat{k}}$

S509 — n=N ?

S511 — Estimate SINR

S512 — Select MCS

S513 — Transfer

# Fig. 5

S600 — $n=1$

S601 — Calculate $R_n$

S602 — $k=1$

S603 — Calculate $H_k R_n^{-1} H_k^T$

S605 — $k=k+1$

S604 — $k=K$ ?

S612 — $n=n+1$

S606 — $\arg_k \max f_k \left( \rho \left\langle H_k^* R_n^{-1} H_k^T \right\rangle \right)$

S607 — $v_{nU} = e \left\langle H_k^* R_n^{-1} H_k^T \right\rangle \Big|_{k=\hat{k}}$

S608 — Estimate SINR

S609 — Determine $\Xi(n)$

S610 — $\Xi(n) > \Xi(n-1)$ ?

S611 — $n=N$ ?

S613 — Select MCS

S614 — Transfer

Fig. 6

S700 — $n=1$

S701 — Calculate $\overline{B}_n$

S702 — Calculate $\Psi_n$

S703 — $k=1$

S704 — Calculate $H_k^* \Phi_n H_k^T$

S706 — $k=k+1$

S705 — $k=K$ ?

S713 — $n=n+1$

S707 — $\arg_k \max \rho \langle H_k^* \Phi_n H_k^T \rangle$

S708 — $v_{nD} = e \langle H_k^* \Phi_n H_k^T \rangle$

S709 — Estimate SINR

S710 — Determine $\Xi(n)$

S711 — $\Xi(n) > \Xi(n-1)$ ?

S712 — $n=N$ ?

S714 — Select MCS

S715 — Caculate $w_n$

S716 — Transfer

Fig. 7

REFERENCES CITED IN THE DESCRIPTION

**Patent documents cited in the description**

- US 20030112880 A